(19) Europäisches Patentamt / European Patent Office / Office européen des brevets

(11) **EP 4 353 441 B1**

(12) **EUROPÄISCHE PATENTSCHRIFT**

(45) Veröffentlichungstag und Bekanntmachung des Hinweises auf die Patenterteilung:
**18.12.2024 Patentblatt 2024/51**

(21) Anmeldenummer: **22201433.4**

(22) Anmeldetag: **13.10.2022**

(51) Internationale Patentklassifikation (IPC):
*B29C 48/92* (2019.01)   *B29C 48/09* (2019.01)
*G01N 21/3581* (2014.01)   *B29C 48/30* (2019.01)
*G01N 21/41* (2006.01)   *B29C 48/90* (2019.01)
*B29C 48/88* (2019.01)   *G01B 11/06* (2006.01)
*G01B 11/10* (2006.01)

(52) Gemeinsame Patentklassifikation (CPC):
**G01N 21/41; B29C 48/09; B29C 48/302;**
**B29C 48/901; B29C 48/9115; B29C 48/92;**
**G01N 21/3581;** B29C 2948/92123;
B29C 2948/92152; B29C 2948/92428;
B29C 2948/92447; B29C 2948/92666;
B29C 2948/92704; B29C 2948/92904;
G01B 11/0691;   (Forts.)

(54) **VERFAHREN UND VORRICHTUNG ZUM ÜBERPRÜFEN EINER EXTRUSIONSVORRICHTUNG**

METHOD AND DEVICE FOR CHECKING AN EXTRUSION DEVICE

PROCÉDÉ ET DISPOSITIF DE CONTRÔLE D'UN DISPOSITIF D'EXTRUSION

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**

(43) Veröffentlichungstag der Anmeldung:
**17.04.2024 Patentblatt 2024/16**

(73) Patentinhaber: **SIKORA AG**
**28307 Bremen (DE)**

(72) Erfinder:
• **BOLTE, Hilmar**
**28717 Bremen (DE)**
• **SCHUH, Kolja Tobias**
**28307 Bremen (DE)**

• **SIKORA, Harald**
**28357 Bremen (DE)**
• **MIESNER, Sebastian**
**27777 Ganderkesee (DE)**

(74) Vertreter: **Hauck Patentanwaltspartnerschaft mbB**
**Postfach 11 31 53**
**20431 Hamburg (DE)**

(56) Entgegenhaltungen:
WO-A1-2021/069997   DE-A1- 102018 124 175
DE-A1- 102020 116 810   DE-U1- 202020 005 512

(52) Gemeinsame Patentklassifikation (CPC): (Forts.)
G01B 11/105

## Beschreibung

Die Erfindung betrifft ein Verfahren zum Überprüfen der Einstellung einer einen entlang seiner Längsrichtung geförderten rohrförmigen Strang erzeugenden Extrusionsvorrichtung, wobei die Austrittsweiten für extrudiertes Material an einer Oberseite und an einer Unterseite einer Extrusionsdüse der Extrusionsvorrichtung unterschiedlich eingestellt ist. Die Erfindung betrifft außerdem eine Vorrichtung zur Durchführung des Verfahrens.

Beispielsweise Kunststoffrohre für die Versorgung von Wohn- und Industriegebieten mit Gas und Wasser, aber auch zur Entwässerung, werden überwiegend aus Materialien wie HDPE, PP und PVC hergestellt. Typische Rohrdurchmesser betragen bis zu 3 m, mit Wanddicken bis zu 250 mm. Die Herstellung erfolgt üblicherweise in Extrusionsvorrichtungen, in denen ein Kunststoffrohmaterial aufgeschmolzen und durch eine üblicherweise ringförmige Extrusionsdüse ausgebracht wird. Das auf diese Weise extrudierte Rohr wird in Längsrichtung von der Extrusionsvorrichtung abgezogen und somit gefördert. Der Durchmesser des abgezogenen Rohrs wird in einer nachgeschalteten zum Beispiel hülsenförmigen Kalibriervorrichtung auf den gewünschten Außendurchmesser geformt. Im Zuge der Förderung durchläuft das Rohr in der Regel mehrere Kühlstrecken, in denen eine Kühlung des Rohrs und somit eine sukzessive Verfestigung der anfangs noch fließfähigen Kunststoffschmelze erfolgt. In einer ersten Kühlstrecke wird das geformte Rohr zum Beispiel mit Vakuum daran gehindert, zusammenzufallen. Die Kühlung des Rohrs in den Kühlstrecken erfolgt häufig durch eine Kühlflüssigkeit, wie Wasser. Das Kühlwasser umspült das Rohr und festigt schnell dessen äußeren Bereich. Nach Austritt aus der ersten Kühlstrecke ist die Außenfläche des Rohrs also in der Regel erstarrt, sodass die Außengeometrie des Rohrs sich nachfolgend im Wesentlichen nicht mehr verändert. Im Inneren der Rohrwandung befinden sich nach Austritt aus der ersten Kühlstrecke jedoch regelmäßig noch fließfähige Anteile des Rohrmaterials. Im weiteren Verlauf des Förderns des rohrförmigen Strangs kommt es insbesondere im Zuge des Durchlaufens weiterer Kühlstrecken sukzessive zu einer Erkaltung und damit Erstarrung auch des Rohrinneren bis zur Innenfläche des Rohrs. Mit Hilfe einer fliegenden Säge wird das Rohr schließlich auf das gewünschte Längenmaß abgelängt.

Die Formgebung des Rohrs im Zuge der vollständigen Erstarrung nach Austritt aus der Extrusionsvorrichtung wird im Wesentlichen durch zwei Effekte beeinflusst, die für das Ziel des Erreichens einer zum Beispiel möglichst einheitlichen Wanddicke des Rohrs zu berücksichtigen sind. Zum einen ist dies eine im Zuge der Erkaltung erfolgende Schrumpfung des Rohrmaterials. Zum anderen ist dies ein Sagging, also ein Absacken der noch fließfähigen viskosen Masseanteile während des Erstarrens durch den Einfluss der Schwerkraft.

Als Reaktion auf diese, die endgültige Geometrie des rohrförmigen Strangs beeinflussenden Effekte ist es bekannt, die Extrusionsdüse der Extrusionsvorrichtung in einem oberen Bereich mit einer größeren Austrittsweite für extrudiertes Material einzustellen als in einem unteren Bereich. Zum Einstellen der Austrittsweite kann ein Austrittsspalt der Extrusionsdüse im oberen Bereich weiter eingestellt werden als in einem unteren Bereich. Alternativ oder zusätzlich kann die Extrusionsdüse in einem oberen Bereich stärker beheizt werden als in einem unteren Bereich und dadurch eine größere Austrittsweite im oberen Bereich als im unteren Bereich der Extrusionsdüse realisiert werden. Durch beide Maßnahmen wird also erreicht, dass im oberen Bereich der Extrusionsdüse mehr Material austritt als im unteren Bereich. Durch diese absichtlich asymmetrische Ausbringung des Materials soll Sagging kompensiert werden, sodass das erstarrte Rohr eine möglichst gleichbleibende Wanddicke über seinen gesamten Umfang aufweist.

Wichtige Geometriewerte des Rohrs, wie Wanddicke und Durchmesser, können abschließend erst nach vollständiger Erstarrung gemessen werden, also am Ende sämtlicher Kühlstrecken des Rohrs, wenn die Schrumpfung und das Sagging vollständig abgeschlossen sind. Eine typische Ausstoßleistung einer Extrusionsvorrichtung beträgt für mittlere Rohrquerschnitte etwa 1.000 kg/h. Die Austrittstemperatur der Schmelze aus der Extrusionsdüse liegt materialabhängig etwa im Bereich von 200°C bis 240°C. Für ein Rohr mit beispielsweise 330 mm Außendurchmesser und 30 mm Wanddicke und einer typischen Kühlstrecke für das Rohr von 60 m liegen erste Messergebnisse bezüglich der Wanddicke und des Durchmessers oftmals erst Stunden nach Produktionsbeginn vor. Erst dann kann bei Feststellung von Geometrieabweichungen von Sollwerten Einfluss auf die Produktionsparameter der Extrusionsvorrichtung genommen werden, wobei sich vorgenommene Veränderungen wiederum erst nach mehreren Stunden erneut überprüfen lassen. Oftmals erforderliche mehrere Korrekturen bis zu einem optimalen Prozess nach einem Prozessstart benötigen mehrere Tage, um zum Beispiel die Wanddicke gleichförmig über den Umfang und auf dessen Nennwert einzustellen.

Um das Sagging zu kompensieren, wird wie erläutert bei der Einstellung der Extrusionsdüse die Austrittsweite im oberen Bereich größer als im unteren Bereich eingestellt. Um jedenfalls eine minimale Wanddicke auch bei Auftreten von Sagging nicht zu unterschreiten, erfolgt in der Regel eine Überkompensation des Saggings, wobei Erfahrungswerte genutzt werden. Letztlich führt dies dazu, dass unnötig viel Material ausgetragen wird.

Es ist folglich wünschenswert, möglichst frühzeitig eine Aussage über die zu erwartende Schrumpfung und das zu erwartende Sagging eines in einer Extrusionsvorrichtung erzeugten Rohrs zu erhalten. Eine Messung zum Beispiel der Wanddicke und des Durchmessers eines Rohrs nach der ersten Kühlstrecke kann nicht den gewünschten finalen Werten entsprechen, die nach der vollständigen Erkaltung des Rohrs vorzufinden wären, weil an dieser Stelle die Wandung des Rohrs nur im äußeren Bereich gefestigtes Material aufweist und im Inneren noch rekristallisierende Anteile und Schmelze aufweist. Daraus folgt, dass an einer Messposition nach einer ersten Kühlstrecke Durchmesser- und Wanddickenwerte erfasst werden, die noch einer Schrumpfung und einem Sagging unterliegen. Zur Beschleunigung des Anfahrprozesses und der weiteren kontinuierlichen Sicherung der Nennwerte ist eine möglichst frühe Vorhersage der zu erwartenden Schrumpfungs- und Sagging-Werte von großer wirtschaftlicher Bedeutung.

In WO 2022/058081 A1 wird ein Verfahren zum Bestimmen von Geometrieparametern eines strang- oder plattenförmigen Gegenstands vorgeschlagen, mit dem die Schrumpfung vorhergesagt wird. Dazu wird in einem Ermittlungsschritt ein Zusammenhang zwischen dem Brechungsindex des Gegenstands und einer bei seiner Verfestigung erfolgenden Schrumpfung ermittelt. In einem Bestimmungsschritt werden der Brechungsindex und mindestens ein Geometrieparameter des noch nicht vollständig verfestigten Gegenstands bestimmt, insbesondere nach einer ersten Kühlstrecke des Gegenstands, und aus den bestimmten Werten wird unter Berücksichtigung des im Ermittlungsschritt ermittelten Zusammenhangs ein Geometrieparameter im vollständig verfestigten Zustand des Gegenstands berechnet. Es erfolgt also eine Vorhersage der Schrumpfung des Materials des Gegenstands im Zuge seiner Verfestigung und auf dieser Grundlage eine Berechnung eines Geometrieparameters, wie beispielsweise einer Wanddicke, im vollständig verfestigten Zustand des Gegenstands.

Mit dem erläuterten Verfahren lässt sich die Schrumpfung als einer der beiden, maßgeblichen Einfluss auf die endgültige Geometrie ausübenden Effekte zuverlässig vorhersagen und berücksichtigen, wobei die Messwerte vorteilhaft bereits kurz nach Austritt des Materials aus der Extrusionsvorrichtung vorliegen und der endgültige Geometrieparameter entsprechend frühzeitig zur Vermeidung von Ausschuss berechnet werden kann. Das Sagging als zweiter maßgeblicher Effekt für die endgültige Geometrie des Gegenstands kann mit dem bekannten Verfahren aus nachstehend noch näher erläuterten Gründen hingegen nicht vorhergesagt werden.

Ein Verfahren zum Ermitteln des aufgetretenen Saggings eines in einer Extrusionsvorrichtung extrudierten Rohrs ist bekannt aus WO 2022/106180 A1. Dabei wird die Wanddicke des Rohrs über den Umfang des Rohrs gemessen und aus den gemessenen Wanddicken ein Wanddickenverlauf über den Umfang des Rohrs erstellt. Aus der Frequenz und/oder der Amplitude des erstellten Wanddickenverlaufs wird ein Absacken der Schmelze (Sagging) ermittelt. Während dieses Verfahren eine zuverlässige Detektion des Saggings ermöglicht, ist eine Vorhersage des Saggings auch mit diesem Verfahren nicht möglich.

Ausgehend von dem erläuterten Stand der Technik liegt der Erfindung daher die Aufgabe zugrunde, ein Verfahren und eine Vorrichtung der eingangs genannten Art bereitzustellen, mit denen unter Berücksichtigung des Saggings eines in einer Extrusionsvorrichtung erzeugten rohrförmigen Strangs die an der Extrusionsvorrichtung eingestellten Austrittsweiten für extrudiertes Material zuverlässig überprüft und gegebenenfalls korrigiert werden können, insbesondere in Echtzeit und mit geringem Zeitversatz nach Austritt des Strangs aus der Extrusionsvorrichtung.

Die Erfindung löst die Aufgabe durch die unabhängigen Ansprüche 1 und 18. Vorteilhafte Ausgestaltungen finden sich in den abhängigen Ansprüchen, der Beschreibung und den Figuren.

Für ein Verfahren der eingangs genannten Art löst die Erfindung die Aufgabe durch folgende Schritte:

- mittels einer Terahertz-Messeinrichtung wird an einer ersten Messposition stromab zumindest einer ersten Kühlstrecke für den rohrförmigen Strang, an der der rohrförmige Strang noch nicht vollständig erstarrt ist, der Brechungsindex über den Querschnitt mindestens einer Wand des rohrförmigen Strangs gemessen,

- mittels der Terahertz-Messeinrichtung werden an der ersten Messposition weiterhin an mindestens einem Messort an der Oberseite und an mindestens einem Messort an der Unterseite des rohrförmigen Strangs Geometriewerte gemessen, wobei die Geometriewerte die Wanddicke und/oder den Innen- und/oder Außendurchmesser des rohrförmigen Strangs umfassen,

- für den gemessenen Brechungsindex und für ein Verhältnis der an der Oberseite und an der Unterseite des rohrförmigen Strangs gemessenen Geometriewerte wird anhand eines zuvor bestimmten Kalibrierzusammenhangs zwischen dem Brechungsindex an der ersten Messposition und dem Verhältnis der Austrittsweiten für extrudiertes Material an der Oberseite und an der Unterseite der Extrusionsdüse das Verhältnis der an der Extrusionsvorrichtung eingestellten Austrittsweiten für extrudiertes Material an der Oberseite und an der Unterseite der Extrusionsdüse überprüft.

Die Erfindung löst die Aufgabe außerdem durch eine Vorrichtung zur Durchführung des erfindungsgemäßen Verfahrens, umfassend die Terahertz-Messeinrichtung und eine Auswerteeinrichtung, die dazu ausgebildet ist, das Verhältnis der eingestellten Austrittsweiten für extrudiertes Material an der Oberseite und an der Unterseite der Extrusionsdüse zu überprüfen.

Mit dem erfindungsgemäßen Verfahren und der erfindungsgemäßen Vorrichtung kann das nachfolgend zu der ersten Messposition noch zu erwartende Sagging, also das Absacken der noch fließfähigen, viskosen Masseanteile des aus der Extrusionsvorrichtung austretenden rohrförmigen Strangs während des Erstarrens durch den Einfluss der Schwerkraft, prognostiziert und auf dieser Grundlage die Einstellung der Extrusionsvorrichtung überprüft und gegebenenfalls korrigiert werden. Bei dem rohrförmigen Strang kann es sich um ein Rohr handeln, beispielsweise ein Kunststoffrohr. Die Extrusionsvorrichtung weist in an sich bekannter Weise eine beispielsweise grundsätzlich kreisringförmige Extrusionsdüse auf, aus der das zuvor aufgeschmolzene Kunststoffmaterial austritt. In ebenfalls an sich bekannter Weise durchläuft der rohrförmige Strang nachfolgend zu dem Austritt aus der Extrusionsvorrichtung regelmäßig mehrere Kühlstrecken, in denen beispielsweise durch eine Kühlflüssigkeit, wie Wasser, das Strangmaterial sukzessive bis zur Erkaltung und damit vollständigen Erstarrung abgekühlt wird. Beispielsweise nach Austritt aus der der Extrusionsvorrichtung unmittelbar nachfolgenden ersten Kühlstrecke kann die äußere Oberfläche des rohrförmigen Strangs bereits erstarrt sein, sodass die Formgebung der äußeren Oberfläche des rohrförmigen Strangs abgeschlossen ist. Im Inneren der Rohrwandung weist das Material des rohrförmigen Strangs hingegen noch rekristallisierende Bereiche und Schmelzeanteile auf und ist entsprechend zumindest teilweise noch fließfähig, wobei es im weiteren Verlauf der Abkühlung des Strangs bekanntlich neben einer Schrumpfung zu einem Sagging kommt. Zur endgültigen Formgebung des rohrförmigen Strangs in der ersten Kühlstrecke ist es möglich, dass in dieser beispielsweise durch Anlegen eines Vakuums das Strangmaterial an die zum Beispiel zylindrische Innenfläche einer Kalibrierhülse gepresst wird.

Grundsätzlich ist es zwar möglich, neben der Schrumpfung auch das zu erwartende Sagging ausgehend von exakt bekannten Rahmenbedingungen und Materialeigenschaften des rohrförmigen Strangs detailliert durch die Navier-Stokes-Gleichungen zu modellieren. Jedoch ist dies numerisch so aufwendig, dass dies für eine vorliegend gewünschte schnelle Vorhersage des Saggings nicht praktikabel ist. So soll erfindungsgemäß zur Vermeidung von Ausschuss möglichst frühzeitig nach Austritt aus der Extrusionsvorrichtung eine zuverlässige Vorhersage über das noch zu erwartende Sagging und damit die endgültige Form des Strangs vorliegen, so dass gegebenenfalls frühzeitig in den Produktionsprozess eingegriffen werden kann, zum Beispiel durch Anpassen der Einstellungen der Extrusionsvorrichtung. Bevorzugt soll die Vorhersage des Saggings dabei in Echtzeit erfolgen. Beides steht der Verwendung der an sich zuverlässigen Navier-Stokes-Gleichungen in diesem Anwendungsfall entgegen.

Anders als bei der Schrumpfung lässt sich das Sagging wie bereits erwähnt nicht in der in WO 2022/058081 A1 erläuterten Weise vorhersagen. Die Schrumpfung von der Extrusionstemperatur bis zur vollständigen Erkaltung ist von dem zeitlichen Ablauf der Erstarrung, insbesondere der Abkühlgeschwindigkeit unabhängig. Daher kann die Schrumpfung in einfacher und zuverlässiger Weise durch einen Vergleich des an der ersten Messposition gemessenen Brechungsindex mit dem Kaltwert des Brechungsindex vorhergesagt werden. Auch kann auf die Schrumpfung kein wesentlicher Einfluss durch Veränderung von Parametern zum Beispiel der Extrusionsvorrichtung oder der Kühlparameter genommen werden. Es handelt sich im Wesentlichen um eine unveränderliche Prozesseigenschaft, die aber relativ einfach prognostiziert werden kann.

Anders ist dies beim Sagging, wo die Abläufe ungleich komplexer sind als bei der Schrumpfung. Beim Sagging spielt zunächst das temperaturabhängige Fließverhalten des Materials, seine Temperatur und die Geschwindigkeit der Abkühlung eine bedeutende Rolle. Allgemein kann festgehalten werden, dass ein Absacken der Schmelze während der Produktion von Rohren um so ausgeprägter sein wird, je höher die Anfangstemperatur der Schmelze ist und je mehr Zeit bis zur Abkühlung und vollständigen Erstarrung der Schmelze vergeht. Veränderliche Betriebsbedingungen bzgl. der Extrusionstemperatur, der Förderleistung des Extruders, der Abzugsgeschwindigkeit und der Intensität und Dauer der Kühlung beeinflussen den Grad des Saggings. Während für die Schrumpfungsvorhersage mit Hilfe des Brechungsindex ein Anlagenstopp ausreicht, bei dem über mehrere Stunden des Abkühlens die Veränderung des Brechungsindex zusammen mit der schrumpfenden Wanddicke und des Durchmessers aufgezeichnet werden, funktioniert diese verlässliche Methode nicht, um das Sagging zu prognostizieren, eben weil das Absacken der Wanddicke deutlich stärker oder schwächer ausfallen wird, wenn das Abkühlen über einen längeren oder kürzeren Zeitraum erfolgt. Auch kann das Sagging - anders als die Schrumpfung - durch Verändern der Parameter der Extrusionsvorrichtung und der Kühlparameter für den rohrförmigen Strang entscheidend beeinflusst werden.

Zur Lösung dieser Probleme werden erfindungsgemäß zunächst mittels einer (ersten) Terahertz-Messeinrichtung an einer ersten Messposition stromab zumindest einer ersten Kühlstrecke für den rohrförmigen Strang, an der dieser noch nicht vollständig erstarrt ist, also noch fließfähige rekristallisierende und/oder Schmelzeanteile aufweist, einerseits der mittlere oder resultierende Brechungsindex über den Querschnitt mindestens einer Wanddicke des rohrförmigen Strangs und andererseits, ebenfalls an der ersten Messposition, an mindestens zwei Messorten an der Oberseite und der Unterseite des rohrförmigen Strangs Geometriewerte, umfassend die Wanddicke und/oder den Innen- und/oder Außendurchmesser, des rohrförmigen Strangs gemessen. Die Terahertz-Messeinrichtung umfasst hierzu einen Terahertz-Sender und einen Terahertz-Detektor, die im Wesentlichen am selben Ort angeordnet und in besonders praxisgemäßer Weise auch zu einem Transceiver zusammengefasst sein können. Die erfindungsgemäß verwendete Terahertz-Messstrahlung kann zum Beispiel in einem Frequenzbereich von 1 Gigahertz bis 6 Terahertz liegen. TerahertzStrahlung eignet sich gut für schwierige Messbedingungen im Umfeld von Extrusionsvorrichtungen, insbesondere mit den hohen Temperaturen, etwaigen Verunreinigungen und dem Auftreten von Dampf und dergleichen. So ist TerahertzStrahlung im Gegensatz zu zum Beispiel Laserstrahlung im sichtbaren Frequenzbereich gegenüber solchen Störungen weitgehend unempfindlich. Die von dem Sender der Terahertz-Messrichtung ausgesandte Terahertz-Strahlung trifft beispielsweise von oben und/oder von unten auf den rohrförmigen Strang. Dabei wird ein Teil der Terahertz-Strahlung an der äußeren Oberfläche des Strangs reflektiert und ein anderer Teil der Terahertz-Strahlung tritt in das Strangmaterial ein. Dabei kommt es zu weiteren Reflexionen an Grenzflächen des rohrförmigen Strangs, insbesondere den Begrenzungen der dem Sender jeweils zugewandten und abgewandten Wandabschnitte des Strangs. Auch tritt ein Teil der Terahertz-Strahlung auf der dem Sender gegenüberliegenden Seite wieder aus dem Strang aus. Dort kann die Terahertz-Messeinrichtung einen Reflektor aufweisen, der die auf der dem Sender abgewandten Strangseite ausgetretene Terahertz-Strahlung wieder zurück zu dem Strang reflektiert, sodass sie nach weiteren Reflexionen an Grenzflächen des Strangs gemeinsam mit den übrigen an den Grenzflächen reflektierten Strahlungsanteilen zu dem beispielsweise am selben Ort wie dem Sender angeordneten Detektor gelangt und von diesem als Messereignis detektiert wird.

In an sich bekannter Weise kann aus der detektierten Strahlung, wie nachfolgend noch näher erläutert wird, der Brechungsindex über den Querschnitt einer oder zweiter gegenüberliegender Wandabschnitte des Strangs an der ersten Messposition bestimmt werden. Der Brechungsindex kann an der Oberseite und/oder an der Unterseite des Strangs gemessen werden. Insbesondere bei einem Durchstrahlen zweier zum Beispiel gegenüberliegender Wandabschnitte des Strangs kann ein mittlerer oder resultierender Brechungsindex über beide durchstrahlten Wandabschnitte bestimmt werden. Weiterhin können in an sich bekannter Weise, zum Beispiel anhand von Laufzeitmessungen, die Abstände zu den einzelnen Grenzflächen des Strangs bestimmt werden, woraus wiederum Geometrieparameter wie Wanddicken und/oder Innen- und/oder Außendurchmesser des Strangs bestimmt werden können. Die Messung an der Oberseite kann zum Beispiel am höchsten Punkt des Strangs erfolgen und die Messung an der Unterseite am niedrigsten Punkt des Strangs. Insbesondere können die obere Wanddicke und die untere Wanddicke des rohrförmigen Strangs an der ersten Messposition gemessen werden. Diese werden sich regelmäßig unterscheiden, da - wie eingangs erläutert - die Extrusionsvorrichtung in der Regel so eingestellt wird, dass an der Oberseite der Extrusionsdüse zum Kompensieren des Saggings mehr Material austritt als an der Unterseite der Extrusionsdüse. Im Bereich der (ersten) Terahertz-Messeinrichtung, also insbesondere unmittelbar stromab der ersten Kühlstrecke, ist diese Asymmetrie regelmäßig noch vorhanden.

Erfindungsgemäß wird für die Prognose des noch zu erwartenden Saggings und der Überprüfung der Extrusionsvorrichtung ein zuvor bestimmter Kalibrierzusammenhang genutzt. Grundlage für die Nutzung des Kalibrierzusammenhangs ist der an der ersten Messposition gemessene Brechungsindex. Der Kalibrierzusammenhang ordnet den Brechungsindex an der ersten Messposition dem Verhältnis der eingestellten Austrittsweiten für extrudiertes Material an der Oberseite und an der Unterseite der Extrusionsdüse zu. Das Verhältnis der Austrittsweiten an der Ober- und Unterseite der Extrusionsdüse, ebenso wie das Verhältnis der gemessenen Geometriewerte an der Ober und Unterseite des Strangs, kann als einfaches Zahlenverhältnis oder zum Beispiel prozentual angegeben werden. Da der Strang im Bereich der ersten Messposition in aller Regel noch Bereiche mit rekristallisierendem Material und Schmelzanteile, insbesondere also noch fließfähiges Material, aufweist, unterscheidet sich der gemessene Brechungsindex von seinem Kaltwert. Der gemessene Wert des Brechungsindex liefert eine Information über die an der ersten Messposition noch im Inneren des rohrförmigen Strangs vorhandenen fließfähigen Anteile, insbesondere rekristallisierende Anteile und/oder Schmelzanteile. Der Kalibrierzusammenhang liefert - insbesondere für definierte Geometrieparameter des Strangs an der ersten Messposition sowie definierte Produktionsparameter der Extrusionsvorrichtung - eine Zuordnung zwischen dem an der ersten Messposition gemessenen Brechungsindex und einem für eine gewünschte Stranggeometrie im vollständig erstarrten Zustand erforderlichen Verhältnis der Austrittsweiten der Extrusionsdüse. Dieses sich nach dem Kalibrierzusammenhang für den gemessenen Brechungsindex ergebende Verhältnis der Austrittsweiten kann zur Überprüfung der Extrusionsvorrichtung mit dem Verhältnis der eingestellten Austrittsweiten der Extrusionsvorrichtung verglichen werden. Die Austrittsweite kann wie eingangs erläutert beispielsweise durch Einstellen eines Austrittsspalts der Extrusionsdüse und/oder durch Ansteuern von Heizeinrichtungen der Extrusionsdüse eingestellt werden. Denkbar ist zum Beispiel, dass die Grundeinstellung der Austrittsweiten durch Einstellen des Austrittsspalts der Extrusionsdüse erfolgt und eine spätere Feineinstellung bzw. Justierung der Austrittsweiten dann nur noch durch Steuern der Heizeinrichtungen der Extrusionsdüse.

Allein ein Erfassen zum Beispiel der Wanddicken an der Ober- und Unterseite des rohrförmigen Strangs an der ersten Messposition ist für die erfindungsgemäße Prognose über das noch zu erwartende Sagging und damit die Überprüfung der Einstellung der Extrusionsvorrichtung nicht ausreichend. Denn ein an der ersten Messposition festgestelltes Wanddickenverhältnis oben/unten des Strangs gibt keine Auskunft darüber, in wieweit ein vorangegangenes Sagging bereits erfolgt oder gar schon abgeschlossen ist. Erst in Kombination mit der Bewertung des an der ersten Messposition gemessenen (resultierenden) Brechungsindex und vorzugsweise dessen Gewichtung zum an der ersten Messposition gemessenen Wanddickenverhältnis oben/unten kann abgeschätzt werden, ob damit eine vollständige Kompensation des Saggings im weiteren Verlauf der Kühlstrecken erfolgen wird, so dass der Strang im vollständig erstarrten Zustand den vorgegebenen Wanddickenverlauf aufweist.

Aufgrund des erfindungsgemäß vereinfachten Ansatzes kann die Vorhersage des stromab der ersten Messposition noch zu erwartenden Saggings und damit die Überprüfung der Extrusionsvorrichtung schnell und in Echtzeit erfolgen, sodass entsprechend schnell zum Beispiel eine Steuerung der Extrusionsvorrichtung erfolgen kann, um den Austritt des Strangmaterials aus der Extrusionsdüse, insbesondere an der Oberseite und der Unterseite der Extrusionsdüse, so einzustellen, dass die gewünschte Geometrie des Strangs im vollständig erstarrten Zustand erreicht wird. Häufig wird die gewünschte Geometrie eines rohrförmigen Strangs eine im Querschnitt kreisförmige Geometrie mit gleichbleibender Wanddicke über den Umfang sein.

Der Kalibrierzusammenhang kann in Form einer Funktion oder Kurve gespeichert sein. In besonders einfacher Weise kann der Kalibrierzusammenhang empirisch ermittelt werden. Dazu kann für den jeweiligen Produktionsprozess bei einer Einstellung der Austrittsweiten der Extrusionsdüse derart, dass der rohrförmige Strang nach seiner vollständigen Erstarrung über seinen Umfang eine vorgegebene Geometrie aufweist, zum Beispiel eine über seinen Umfang gleichförmige Wanddicke, der sich an der ersten Messposition ergebende, gemessene Brechungsindex und der gemessene Quotient der Geometriewerte, insbesondere der Wanddicken, an der Ober- und Unterseite gespeichert werden. Mit diesem gespeicherten Brechungsindex kann dann in einem späteren Prozess der an der ersten Messposition gemessene Brechungsindex verglichen werden. Der Brechungsindex ist bekanntlich temperaturabhängig. Weicht der gemessene Brechungsindex von dem gespeicherten Brechungsindex ab, kann davon ausgegangen werden, dass eine Veränderung der Temperatur und damit insbesondere der noch fließfähigen Anteile im Inneren des Strangs an der ersten Messposition vorliegen. Damit kann weiter davon ausgegangen werden, dass eine Korrektur der eingestellten Austrittsweiten der Extrusionsdüse erforderlich ist, um die gewünschte Geometrie des Strangs im erstarrten Zustand zu erreichen. Im Rahmen einer empirischen Erstellung des Kalibrierzusammenhangs können entsprechend für unterschiedliche Brechungsindizes an der ersten Messposition weitere Einstellungen der Austrittsweiten gespeichert werden, die zu der gewünschten Geometrie des Strangs im erstarrten Zustand führen.

Besonders Veränderungen der Produktionsparameter im Bereich vor der ersten Messposition können einen erheblichen Einfluss auf das Sagging und damit die Geometrie des Strangs im erstarrten Zustand haben. Solche Veränderungen treten besonders beim Anfahren eines Produktionsprozesses nach einem Produktionsstillstand auf. Beispielhaft genannt seien eine sich im Zuge des Anfahrens langsam erhöhende Temperatur der Extrusionsdüse oder eine Veränderung der Ausstoßleistung der Extrusionsvorrichtung. Ein weiteres Beispiel ist eine Veränderung der Kühlparameter, zum Beispiel durch eine Veränderung der Zusammensetzung und/oder Temperatur der Kühlflüssigkeit. Solche Veränderungen können neben dem an der ersten Messposition gemessenen Brechungsindex insbesondere auch anhand der an der ersten Messposition gemessenen Geometriewerte erkannt werden. Dies insbesondere, da bis zum Austritt aus der ersten Kühlstrecke bereits ein erheblicher Teil des insgesamt auftretenden Saggings erfolgt ist. Erfindungsgemäß ist es also möglich, bei einem Wiederanfahren eines Produktionsprozesses anhand des Kalibrierzusammenhangs besonders frühzeitig bereits optimale Prozessparameter, insbesondere der Extrusionsvorrichtung, einzustellen.

Veränderungen des Produktionsprozesses können neben dem Brechungsindex insbesondere auch durch die an der ersten Messposition erfassten Geometriewerte erkannt werden. Verändern sich die an der ersten Messposition erfassten Geometriewerte, lässt dies darauf schließen, dass auch das nach dem Kalibrierzusammenhang berücksichtigte, zu erwartende Sagging verändert ist. Entsprechend kann nach einer Ausgestaltung vorgesehen sein, dass der Kalibrierzusammenhang für definierte Geometriewerte des rohrförmigen Strangs zum Beispiel an der ersten Messposition bestimmt wird. Es kann dann weiter vorgesehen sein, dass bei einer festgestellten Abweichung der an der ersten Messposition gemessenen Geometriewerte von den definierten Geometriewerten eine Warnung ausgegeben wird und/oder der Kalibrierzusammenhang entsprechend der festgestellten Abweichung der Geometriewerte angepasst wird. Zum Beispiel kann der Kalibrierzusammenhang um einen der festgestellten Veränderung entsprechenden Faktor angepasst werden. Dieser Faktor kann anhand von Erfahrungswerten angepasst werden, zum Beispiel mit einem konstanten Faktor multipliziert werden, der den Einfluss der Veränderung auf das auftretende Sagging berücksichtigt.

Bei der Ermittlung des Kalibrierzusammenhangs können weiterhin Materialparameter des rohrförmigen Strangs, insbesondere die Wärmeleitfähigkeit und/oder die Wärmekapazität berücksichtigt werden. Auch können Produktionsparameter, insbesondere die Temperatur der Extrusionsdüse und/oder die Abzugsgeschwindigkeit der Extrusionsvorrichtung und/oder Abkühlparameter des erzeugten rohrförmigen Strangs, berücksichtigt werden. Auch solche Parameter haben einen Einfluss auf das auftretende Sagging.

Nach einer weiteren Ausgestaltung kann der Kalibrierzusammenhang den Brechungsindex an der ersten Messposition einem Soll-Verhältnis der Austrittsweiten für extrudiertes Material an der Oberseite und an der Unterseite der Extrusionsdüse zuordnen, so dass der rohrförmige Strang nach seiner vollständigen Erstarrung einen Soll-Wanddickenverlauf, insbesondere einen gleichförmigen Wanddickenverlauf, über seinen Umfang aufweist. Wie bereits erwähnt, kann der zum Beispiel empirisch ermittelte Kalibrierzusammenhang in Form einer Funktion oder Kurve vorliegen. Dabei kann der Brechungsindex an der ersten Messposition in Abhängigkeit des an der Extrusionsdüse als Soll-Verhältnis einzustellenden Verhältnisses der Austrittsweiten für extrudiertes Material an der Oberseite und der Unterseite aufgetragen sein. Im einfachsten Fall kann die Kurve eine Gerade mit negativer Steigung sein. Sie kann aber auch eine von einer Gerade abweichende Kurve sein.

Nach einer weiteren Ausgestaltung kann bei Feststellen einer Abweichung zwischen dem sich für den an der ersten Messposition gemessenen Brechungsindex nach dem Kalibrierzusammenhang ergebenden Soll-Verhältnis der Austrittsweiten der Extrusionsdüse und dem Verhältnis der eingestellten Austrittsweiten der Extrusionsdüse das sich für den gemessenen Brechungsindex nach dem Kalibrierzusammenhang ergebende Soll-Verhältnis angezeigt werden. Alternativ oder zusätzlich kann die Extrusionsvorrichtung zum Einstellen des sich für den gemessenen Brechungsindex nach dem Kalibrierzusammenhang ergebenden Soll-Verhältnisses angesteuert werden, vorzugsweise automatisch. Das Ansteuern kann durch eine Auswerteeinrichtung durchgeführt werden. Damit ist eine automatische Steuerung der Extrusionsvorrichtung möglich. Die Anzeige des Soll-Verhältnisses kann auf einem Bedienerdisplay für eine Bedienperson erfolgen.

Wie bereits erläutert, kann auf Grundlage eines Vergleichs der an der ersten Messposition gemessenen Geometriewerte mit den an der Extrusionsvorrichtung eingestellten Austrittsweiten ein bis zur vollständigen Erstarrung des rohrförmigen Strangs erwartetes Sagging des rohrförmigen Strangs prognostiziert werden. Das prognostizierte Sagging und/oder erwartete Werte der gemessenen Geometriewerte im vollständig erstarrten Zustand des rohrförmigen Strangs können dann wiederum angezeigt werden und/oder das sich nach dem Kalibrierzusammenhang ergebende Soll-Verhältnis der Austrittsweiten für extrudiertes Material an der Oberseite und an der Unterseite der Extrusionsdüse auf Grundlage des prognostizierten Saggings angepasst werden.

Nach einer weiteren Ausgestaltung können an der ersten Messposition der Brechungsindex und/oder die Geometriewerte an einer Vielzahl von Messorten über den Umfang des rohrförmigen Strangs gemessen werden. Hierzu können zum Beispiel mehrere Terahertz-Sender und Terahertz-Detektoren über den Umfang des rohrförmigen Strangs verteilt angeordnet sein. Bevorzugt kann eine um den rohrförmigen Strang rotierende Terahertz-Messeinrichtung mit einem Terahertz-Sender und Terahertz-Detektor und gegebenenfalls einem Reflektor vorgesehen sein, mit der über den Umfang verteilt Messwerte generiert werden können. Insbesondere ist auf diese Weise grundsätzlich eine vollständige Abdeckung des Umfangs des Strangs denkbar. Gegenüber einer Messung nur von der Oberseite und von der Unterseite des rohrförmigen Strangs bietet eine weitergehende Vermessung über den Umfang, insbesondere auch an den Seiten des Strangs weitere Vorteile. So kann zum Beispiel eine eventuell bereits weiter fortgeschrittene Erstarrung der Seitenwände des Strangs erkannt werden, die ein Abfließen der noch fließfähigen Anteile schwerkraftbedingt nach unten beeinflussen bzw. verhindern und damit das Sagging beeinflussen könnte.

Nach einer weiteren Ausgestaltung kann der Brechungsindex aus einem Vergleich der Laufzeit von durch die Terahertz-Messeinrichtung ausgesandter Messstrahlung ohne in dem Strahlengang der Messstrahlung angeordnetem rohrförmigem Strang mit der Laufzeit der Messstrahlung mit in dem Strahlengang der Messstrahlung angeordnetem rohrförmigem Strang bestimmt werden. Diese Vorgehensweise zum Bestimmen eines unbekannten Brechungsindex eines Gegenstands ist zum Beispiel in der EP 3 265 748 B 1 beschrieben. Die Brechungsindexbestimmung mit der Terahertz-Messeinrichtung kann vorliegend in entsprechender Weise erfolgen.

Nach einer weiteren Ausgestaltung kann der Brechungsindex bestimmt werden, indem mit der Terahertz-Messeinrichtung die optische Wanddicke des rohrförmigen Strangs bestimmt wird, weiter indem mit der Terahertz-Messeinrichtung ein Außendurchmesser und ein Innendurchmesser des rohrförmigen Strangs bestimmt werden, und indem aus einem Vergleich der bestimmten Außen- und Innendurchmesser mit der bestimmten optischen Wanddicke der Brechungsindex des rohrförmigen Strangs bestimmt wird. Diese alternative Art zur Bestimmung eines unbekannten Brechungsindex ist in der DE 10 2018 128 248 A1 beschrieben. Wiederum kann diese Vorgehensweise vorliegend zur Anwendung kommen.

Gemäß einer besonders praxisgemäßen Ausgestaltung können die Geometriewerte des rohrförmigen Strangs aus einer Laufzeitmessung von durch die Terahertz-Messeinrichtung ausgesandter Messstrahlung bestimmt werden.

Nach einer weiteren Ausgestaltung kann an einer von der ersten Messposition in Längsrichtung des rohrförmigen Strangs beabstandeten zweiten Messposition, insbesondere einer zweiten Messposition stromab der ersten Messposition, an der der rohrförmige Strang im Wesentlichen vollständig erstarrt ist, mit einer weiteren Terahertz-Messrichtung der Brechungsindex über den Querschnitt mindestens einer Wand des rohrförmigen Strangs und/oder die Wanddicke und/oder der Innen- und/oder Außendurchmesser des rohrförmigen Strangs gemessen werden. Weiterhin können an der zweiten Messposition mit der weiteren Terahertz-Messeinrichtung die Wanddicke und/oder der Innen- und/oder Außendurchmesser des rohrförmigen Strangs an der Oberseite des rohrförmigen Strangs und die Wanddicke an der Unterseite des rohrförmigen Strangs gemessen werden. Auch kann anhand der Messergebnisse der weiteren Terahertz-Messeinrichtung der Kalibrierzusammenhang überprüft und gegebenenfalls korrigiert werden.

Die zweite Messposition kann grundsätzlich stromauf oder stromab der ersten Messposition liegen. Bevorzugt liegt sie stromab, und insbesondere bevorzugt soweit stromab, dass der rohrförmige Strang im Wesentlichen vollständig erstarrt ist. Die weitere Terahertz-Messeinrichtung kann grundsätzlich ausgestattet sein wie die an der ersten Messposition vorgesehene (erste) Terahertz-Messeinrichtung. Auch die weitere Terahertz-Messeinrichtung weist einen (weiteren) Terahertz-Sender und einen (weiteren) Terahertz-Detektor auf, die wiederum in besonders praxisgemäßer Weise zu einem Transceiver kombiniert sein können. Gegenüberliegend zu dem Sender und gegebenenfalls dem am gleichen Ort angeordneten Detektor kann wiederum ein Reflektor auf der abgewandten Seite des rohrförmigen Strangs angeordnet sein. Die weitere Terahertz-Messrichtung kann in kostengünstiger Weise an einer festen Position angeordnet sein, insbesondere derart, dass sie von oben senkrecht nach unten oder unten senkrecht nach oben Terahertz-Messstrahlung auf den rohrförmigen Strang aussendet. Auch denkbar wäre, dass es sich bei der weiteren Terahertz-Messeinrichtung um eine tragbare Messeinrichtung handelt, insbesondere eine sogenannte Handheld-Messeinrichtung, die also nicht permanent an der zweiten Messposition angeordnet ist. Die Messung des Brechungsindex und der genannten Geometrieparameter kann wiederum in der oben zu der in der ersten Messposition angeordneten Terahertz-Messeinrichtung erläuterten Weise erfolgen. An der zweiten Messposition können, insbesondere wenn an dieser der rohrförmige Strang im Wesentlichen vollständig erstarrt ist, endgültige Material- und Geometrieparameter des Strangs gemessen werden, einschließlich des Kaltwerts des Brechungsindex. Die Messung mit einer weiteren Terahertz-Messeinrichtung ist dabei wesentlich genauer als beispielsweise eine Messung mit einem mechanischen Taster. Die an der zweiten Messposition gemessenen endgültigen Parameter können mit den Parametern des Kalibrierzusammenhangs verglichen werden und der Kalibrierzusammenhang kann auf Grundlage der tatsächlich gemessenen endgültigen Parameter verifiziert und gegebenenfalls angepasst werden.

Mit der vorgenannten Ausgestaltung wird die Abhängigkeit von Materialparametern des erfindungsgemäßen Modells verringert. Gerade im Bereich von Kunststoffsträngen sind die Materialparameter oft nicht ausreichend präzise bekannt bzw. definiert. Um die Abhängigkeit von Materialparametern zu verringern, kann bei der vorgenannten Ausgestaltung also ein zusätzlicher Sensor genutzt werden, um zum Beispiel den Kaltwert des Brechungsindex und die Wanddicke an mindestens einer Winkelposition über den Umfang des Strangs oder ein Verhältnis zwischen mindestens zwei Wanddicken an unterschiedlichen Winkelpositionen zu messen, beispielsweise bei einer senkrecht oberhalb des Strangs fest positionierten Terahertz-Messeinrichtung das Verhältnis zwischen oberer und unterer Wanddicke des Strangs. Der erfindungsgemäß genutzte Kalibrierzusammenhang kann dann auf Grundlage der Messwerte der weiteren Terahertz-Messeinrichtung verifiziert werden, um zum Beispiel durch zur Realität abweichende Materialparameter hervorgerufene Abweichungen zu reduzieren. Insbesondere können durch die weitere Terahertz-Messeinrichtung etwaige Veränderungen der Prozesstemperatur stromab der ersten Messposition erkannt werden, die wie erläutert Einfluss auf das Sagging haben. Beispielhaft genannt sei eine veränderte Abkühlgeschwindigkeit des Strangs.

Zum Beispiel empirisch kann ein Zusammenhang zwischen dem Brechungsindex und dem Kristallisationszustand des Strangmaterials für die Bestimmung eines Sagging-Faktors genutzt werden

$$SF = k * \Delta_N$$

mit:

SF:  Sagging-Faktor

k:  Faktor

$\Delta_N$:  Brechungsindex-Differenz zwischen an erster Messposition gemessenem Brechungsindex und Kaltwert des Brechungsindex

Je größer der so bestimmte Sagging-Faktor SF, desto stärkeres Sagging ist zu erwarten. Die Volumen- oder Massefließrate des noch fließfähigen viskosen Materials ist etwa proportional zu dem Sagging-Faktor. Mit genauer Kenntnis des Kaltwerts des Brechungsindex können der Sagging-Faktor und damit der Kalibrierzusammenhang genauer bestimmt werden.

Damit kann das erfindungsgemäße Modell zur Vorhersage des erwarteten Saggings weiter verbessert werden. Insbesondere stellt der Sagging-Faktor an der jeweiligen Messposition einen Indikator dar, aus dem abgeleitet werden kann, in welchem Umfang im weiteren Verlauf der Extrusionslinie sich die regelmäßig bewusst eingestellte Differenz der aus der Extrusionsdüse austretenden Wanddicke im oberen Bereich und im unteren Bereich noch verändern wird. Auf dieser Grundlage kann durch Einstellung des Ringspalts der Extrusionsdüse und/oder geeigneter Temperatureinstellung der Extrusionsdüse der Extrusionsvorrichtung der Sagging-Faktor SF am Messort der Terahertz-Messeinrichtung so voreingestellt werden, dass sich mit dem noch verbleibenden Sagging die gewünschte, in der Regel gleichförmige Wanddicke des Strangs über den gesamten Umfang ergibt.

Nach einer weiteren Ausgestaltung kann vorgesehen sein, dass der Kalibrierzusammenhang den Brechungsindex an der ersten Messposition weiterhin einem Verhältnis der Wanddicken an der Oberseite und an der Unterseite des rohrförmigen Strangs an der ersten Messposition zuordnet, wobei zur Umrechnung zwischen dem Verhältnis der Wanddicken an der Oberseite und an der Unterseite des rohrförmigen Strangs an der ersten Messposition und dem Soll-Verhältnis der Austrittsweiten für extrudiertes Material an der Oberseite und an der Unterseite der Extrusionsdüse ein Gewichtungs-Faktor angewendet wird, der einen unterschiedlichen Sagging-Grad stromauf der ersten Messposition und stromab der ersten Messposition berücksichtigt. Es kann also eine Gewichtung definiert werden zwischen dem durch die Messung der Geometriewerte an der ersten Messposition festgestellten, bereits erfolgten Sagging des Strangs, und dem nachfolgend bis zur vollständigen Erstarrung noch zu erwartenden Sagging. Das bereits erfolgte Sagging ergibt sich aus dem Vergleich der an der ersten Messposition gemessenen Geometriewerte mit den an der Extrusionsdüse eingestellten Austrittsweiten. Wird zum Beispiel davon ausgegangen, dass sich dieses nachfolgend zu der ersten Messposition fortsetzen wird, aber in geringerem Umfang, kann durch Multiplikation des bereits erfolgten Saggings mit einer Zahl kleiner als 1 unter Berücksichtigung des an der ersten Messposition gemessenen Brechungsindex das noch zu erwartende Sagging prognostiziert werden. Umgekehrt kann ein Gewichtungs-Faktor gebildet werden, der angibt, um welches Maß das Sagging vor der ersten Messposition größer ist als das Sagging nach der ersten Messposition. Zum Beispiel durch Bilden eines ersten Quotienten der vertikalen Spaltabmessungen der Extrusionsdüse im oberen und unteren Bereich und eines zweiten Quotienten der an der ersten Messposition gemessenen Wanddicken im oberen und unteren Bereich können zwei Quotienten miteinander verglichen werden, zum Beispiel ein Quotient aus dem ersten und zweiten Quotienten gebildet werden. Dieser kann dann den Gewichtungs-Faktor bilden. Da der Großteil des Saggings zwischen dem Austritt aus der Extrusionsvorrichtung und der ersten Messposition erfolgt, und danach in der Regel nur noch ein geringeres Sagging auftritt, wird der Gewichtungs-Faktor also in der Regel größer als 1 sein. Beispielhaft könnte der Gewichtungs-Faktor etwa 3 betragen. Für ein bestimmtes Strangmaterial und konstante Produktionsverhältnisse kann auf Grundlage eines solchen Gewichtungs-Faktors die üblicherweise gewünschte gleichförmige Wanddicke des Strangs über den Umfang erhalten werden. Mittels dieses Gewichtungs-Faktors bzw. eines durch Umkehrung gebildeten Gewichtungs-Quotienten kann in dem Kalibrierzusammenhang der Brechungsindex an der ersten Messposition wahlweise dem an der ersten Messposition gemessenen Verhältnis der Wanddicken des Strangs an seiner Oberseite und seiner Unterseite oder dem Soll-Verhältnis der Austrittsweiten an der Oberseite und der Unterseite der Extrusionsdüse der Extrusionsvorrichtung zugeordnet werden. Es ist damit möglich, anhand der an der ersten Messposition gemessenen Geometriewerte und des gemessenen Brechungsindex unmittelbar den an der Extrusionsdüse einzustellenden Offset zu finden und vorzugeben. Es kann somit eine Steuerung bzw. Regelung der Austrittsweiten der Extrusionsdüse unmittelbar auf Grundlage der an der ersten Messposition erzielten Messwerte erfolgen.

Sofern eine weitere Terahertz-Messeinrichtung an einer zweiten Messposition stromab der ersten Messposition vorgesehen ist, können deren Messwerte für eine Feinjustierung des erfindungsgemäßen Modells und damit der Extrusionsvorrichtung genutzt werden. Dabei wird ausgenutzt, dass an der ersten Messposition, nach einer ersten Kühlstrecke, die Schmelze bereits so weit abgekühlt ist, dass sich neben einer erkalteten äußeren Zone noch ein Anteil rekristallisierender Schmelze im Inneren des Strangs, insbesondere innerhalb der Rohrwandung, befindet. Es ist dann auch möglich, einen dritten Quotienten der an der zweiten Messposition der zweiten Terahertz-Messeinrichtung 27, also im vollständig erstarrten Zustand, gemessenen Wanddicken im oberen und unteren Bereich zu bilden. Dieser dritte Quotient, der im Idealfall zum Beispiel 1 sein sollte, kann dann mit dem ersten und zweiten Quotienten verglichen werden. In ähnlicher Weise könnte auch ein Quotient aus dem an der ersten Messposition gemessenen Brechungsindex und dem an der zweiten Messposition gemessenen (Kaltwert des) Brechungsindex gebildet werden.

Bei der erfindungsgemäßen Vorrichtung liegen die Messwerte der Terahertz-Messeinrichtung und gegebenenfalls der weiteren Terahertz- Messeinrichtung an der Auswerteeinrichtung an. Die Auswerteeinrichtung ist ausgebildet zum Durchführen der erfindungsgemäßen Auswertung und Überprüfung. Sie ist insbesondere auch ausgebildet zum Durchführen der Ausgestaltungen nach den abhängigen Ansprüchen des erfindungsgemäßen Verfahrens. Die Auswerteeinrichtung kann dazu eine Steuereinrichtung umfassen, insbesondere zum Steuern der Extrusionsvorrichtung, insbesondere der Extrusionsdüse, in der oben erläuterten Weise. Die Vorrichtung kann entsprechend auch die weitere Terahertz-Messeinrichtung umfassen. Auch kann die Vorrichtung die Extrusionsvorrichtung umfassen.

Ein Ausführungsbeispiel der Erfindung wird nachfolgend anhand von Figuren näher erläutert. Es zeigen schematisch:

Figur 1     eine Vorrichtung zur Durchführung des erfindungsgemäßen Verfahrens in einer schematischen Seitenansicht,

Figur 2     eine geschnittene Teildarstellung der Vorrichtung aus Fig. 1,

Figur 3     ein Diagramm zur Veranschaulichung der Temperaturabhängigkeit des Brechungsindex,

Figur 4     ein Diagramm zur Veranschaulichung der Veränderlichkeit des Brechungsindex über die radiale Position innerhalb der Wand eines noch nicht vollständig erstarrten Rohrs

Figur 5     ein Diagramm zur Veranschaulichung des erfindungsgemäßen Kalibrierzusammenhangs,

Figur 6     ein Diagramm zur Veranschaulichung der Temperaturverteilung in radialer Richtung innerhalb der Wand eines noch nicht vollständig erstarrten Rohrs, und

Figur 7     ein Diagramm zur Veranschaulich unterschiedlicher an der ersten Messposition gemessener Wanddicken über den Umfang eines rohrförmigen Strangs.

Soweit nichts anderes angegeben ist, bezeichnen in den Figuren gleiche Bezugszeichen gleiche Gegenstände.

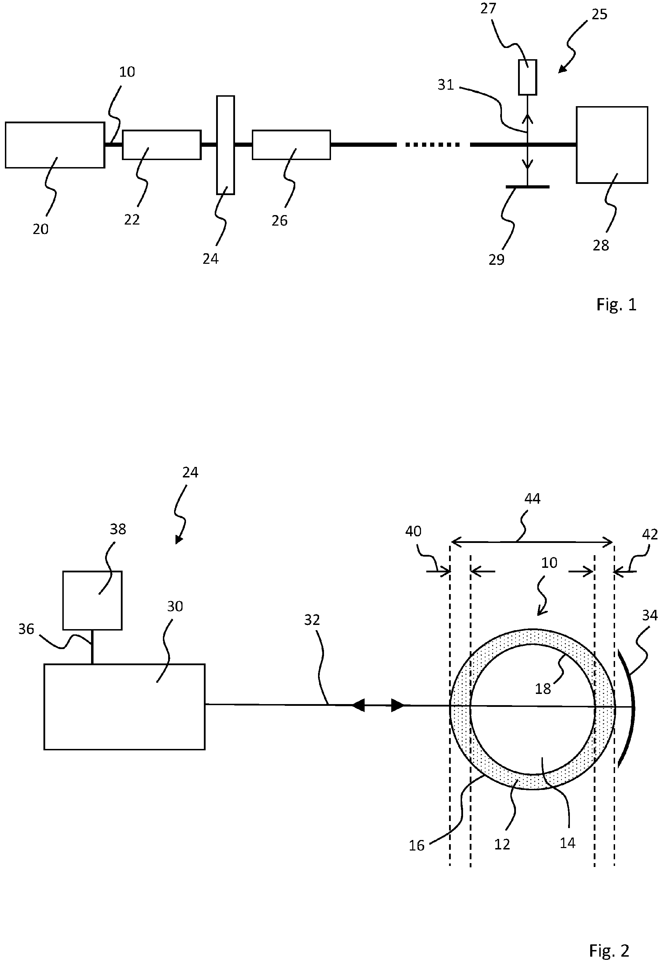

In den Figuren 1 und 2 ist ein rohrförmiger Strang 10, vorliegend ein Rohr 10, insbesondere ein Kunststoffrohr 10, dargestellt, welches eine Wand 12, einen durch das Rohr 10 begrenzten Hohlraum 14, eine im Querschnitt kreisförmige äußere Oberfläche 16 und eine im Querschnitt ebenfalls kreisförmige innere Oberfläche 18 besitzt, die den Hohlraum 14 begrenzt. Das Rohr 10 wird im vorliegenden Beispiel mit Hilfe eines Extruders in einer Extrusionsvorrichtung 20 extrudiert und mittels einer geeigneten Fördereinrichtung entlang seiner Längsachse gefördert, in Figur 1 von links nach rechts. Nach Austritt aus der zum Beispiel ringförmigen Extrusionsdüse der Extrusionsvorrichtung 20 durchläuft das Rohr 10 zunächst eine erste Kühlstrecke 22, in der das Rohr 10, welches stark erhitzt und noch nicht vollständig verfestigt, also noch rekristallisierende und fließfähige Anteile (Schmelze) aufweisend, aus der Extrusionsdüse austritt, abgekühlt wird. Die erste Kühlstrecke 22 kann eine Kalibriereinrichtung, insbesondere eine Kalibrierhülse umfassen, gegen die das Rohr 10 zum Beispiel durch ein Vakuum und den Normaldruck im Inneren des Rohrs 10 gepresst wird. Dadurch wird der durch die Extrusionsdüse vorgeformte Außendurchmesser des Rohrs 10 endgültig festgelegt. Im weiteren Verlauf durchläuft das Rohr 10 eine erste Terahertz-Messeinrichtung 24, in der in nachfolgend näher erläuterter Weise der Brechungsindex und Geometrieparameter des Rohrs 10, wie zum Beispiel Innen- und/oder Außendurchmesser und/oder Wanddicke bestimmt werden. Nachfolgend zu der ersten Terahertz-Messrichtung 24 durchläuft das Rohr 10 mindestens eine weitere Kühlstrecke 26, in der eine weitere Abkühlung erfolgt. Durch die Strichelung des Rohrs 10 ist veranschaulicht, dass weitere Kühlstrecken 26 vorgesehen sein können. Nach vollständiger Verfestigung des Rohrs 10 wird dieses in einer zum Beispiel eine fliegende Säge aufweisenden Ablängeinrichtung 28 auf vorgegebene Abschnitte abgelängt.

Anhand Figur 2 sollen der Aufbau und die Funktion der ersten Terahertz-Messeinrichtung 24 näher erläutert werden. Die erste Terahertz-Messeinrichtung 24 umfasst in dem dargestellten Beispiel einen Transceiver 30, in dem ein Sender und ein Detektor für Terahertzstrahlung kombiniert sind. Der Sender sendet Terahertzstrahlung 32 auf das Rohr 10 aus. Die Terahertzstrahlung wird an unterschiedlichen Grenzflächen des Rohrs 10 und an einem dem Transceiver 30 gegenüberliegend angeordneten Reflektor 34 reflektiert und gelangt zurück zu dem Transceiver 30, wo sie durch den Detektor detektiert wird. Der Transceiver 30 ist weiterhin über eine Leitung 36 mit einer Auswerteeinrichtung 38 verbunden. Die von dem Detektor empfangene reflektierte Strahlung erzeugt entsprechende Messsignale, die über die Leitung 36 an die Auswerteeinrichtung 38 weitergegeben werden. Die Auswerteeinrichtung 38 kann auf diese Weise zum Beispiel die in Figur 2 eingezeichneten Wanddicken 40, 42 sowie den Innen- und/oder Außendurchmesser 44 bestimmen, zum Beispiel anhand von Laufzeitmessungen. Auch kann die Auswerteeinrichtung 38 auf Grundlage der von dem Detektor empfangenen Messsignale den Brechungsindex des Strangmaterials bestimmen, wie dies beispielsweise in der WO 2016/139155 A1 oder DE 10 2018 128 248 A1 beschrieben ist.

Mit der ersten Terahertz-Messeinrichtung 24 werden zum Beispiel der Außendurchmesser 44 und die Wanddicken 40, 42 des Rohrs 10 sowie der Brechungsindex an der in Figur 1 gezeigten ersten Messposition bestimmt, an dem das Rohr 10 noch nicht vollständig verfestigt ist, also noch fließfähige Anteile aufweist. Dabei kann der Transceiver 30 beispielsweise entlang einer Kreisbahn um das Rohr 10 rotieren und so die Geometrieparameter und den Brechungsindex an verschiedenen Orten über den Umfang des Rohrs 10 bestimmen. Der Reflektor 34 kann ebenfalls um das Rohr 10 rotieren. Es ist aber auch möglich, dass auf den Reflektor 34 verzichtet wird.

Zwischen der mindestens einen weiteren Kühlstrecke 26 und der Ablängvorrichtung 28 befindet sich eine weitere Terahertz-Messeinrichtung 25. Die weitere Terahertz-Messeinrichtung 25 umfasst ebenfalls einen Transceiver 27, in dem ein Sender und ein Detektor für Terahertz-Strahlung kombiniert sind. Auf einer gegenüberliegenden Seite des Rohrs 10 ist wiederum ein Reflektor 29 für Terahertz-Strahlung angeordnet. Dieser reflektiert von dem Sender ausgesandte Terahertz-Strahlung 31 nach Durchstrahlen des Rohrs 10 und Reflexionen an Grenzflächen des Rohrs 10 zurück zu dem Detektor.

Wie nachfolgend näher erläutert wird, misst die weitere Terahertz-Messeinrichtung 25 an einer zweiten Mesposition, an der das Rohr 10 im Wesentlichen vollständig erstarrt ist, den Brechungsindex sowie zumindest die Wanddicke des Rohrs 10 an der Oberseite und der Unterseite. Die Messung des Brechungsindex und der Geometrieparameter, wie des Innen- und/oder Außendurchmessers und/oder der Wanddicke des Rohrs 10 kann durch die weitere Terahertz-Messeinrichtung 25 an der in Figur 1 gezeigten zweiten Messposition in der oben zur ersten Terahertz-Messeinrichtung 24 erläuterten Weise erfolgen, in diesem Fall an einer Messposition, an der das Rohr 10 im Wesentlichen vollständig erstarrt ist. Die weitere Terahertz-Messeinrichtung 25 kann in besonders einfacher Weise positionsfest angeordnet sein, und lediglich senkrecht von oben oder unten Terahertz-Strahlung auf das Rohr 10 aussenden, sodass die genannten Geometrieparameter, insbesondere die Wanddicken an der Oberseite und der Unterseite des Rohrs 10 gemessen werden. Es kann sich bei der weiteren Terahertz-Messeinrichtung 25 auch um ein tragbares Handheld-Gerät handeln.

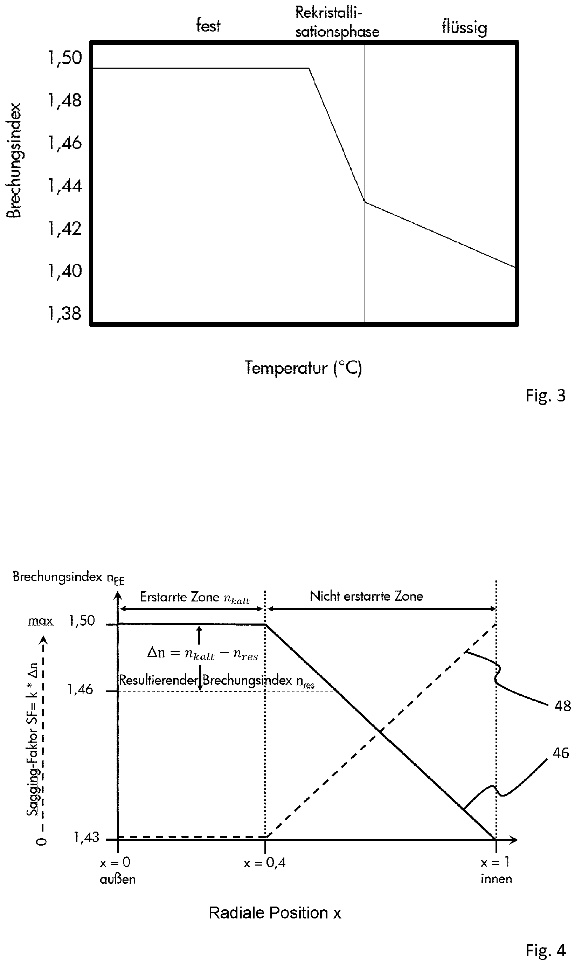

Figur 3 zeigt die Abhängigkeit des Brechungsindex von der Temperatur bzw. dem Aggregatzustand. Erkennbar ist einerseits, dass der Zusammenhang zwischen dem Brechungsindex und der Temperatur bzw. dem Aggregatzustand nicht-linear ist. Andererseits ist erkennbar, dass sich der Brechungsindex besonders stark in der Rekristallisationsphase, also am Übergang zwischen dem festen und dem flüssigen Aggregatzustand ändert. Dies wird bei dem erfindungsgemäßen Verfahren genutzt, indem aus dem jeweils gemessenen Brechungsindex auf den noch verbliebenen Anteil von Material in der Rekristallisationsphase und gegebenenfalls im flüssigen Zustand geschlossen und daraus auf ein nachfolgend zu der Messung an der ersten Messposition noch zu erwartendes Sagging gefolgert wird.

In Figur 4 ist sehr schematisch der Brechungsindex aufgetragen über der radialen Position x über die Wanddicke. Auf der x-Achse ist ein Bereich von 0 bis 1 aufgetragen, wobei die Wanddicke 0 entsprechend an der Außenfläche und der Wert 1 an der Innenfläche der betrachteten Wand des Rohrs 10 vorliegt. Die in Figur 4 als durchgezogene Linie gezeigte Kurve 46 zeigt den Brechungsindex. Erkennbar ist dieser im Bereich der erstarrten Zone, also im Bereich von etwa 0 bis 0,4 auf der x-Achse, konstant und entspricht dem Kaltwert des Brechungsindex $n_{kalt}$, vorliegend beispielsweise 1,5. In der sich radial nach innen betrachtet anschließenden nicht erstarrten Zone sinkt der Brechungsindex ab bis auf einen Minimalwert, von vorliegend etwa 1,46. Es sei darauf hingewiesen, dass der tatsächliche Verlauf des Brechungsindex insbesondere im Bereich der nicht erstarrten Zone tatsächlich nicht linear sein muss. An der waagerechten gestrichelten Linie in Figur 4 liegt ein beispielsweise an der ersten Messposition über den Querschnitt mindestens einer Wand des Rohrs 10 gemessener resultierender Brechungsindex $n_{res}$ von beispielsweise 1,46 vor. Aus einem Vergleich mit dem Kaltwert des Brechungsindex $n_{kalt}$ lässt sich somit ableiten, dass noch ein Anteil des Strangmaterials in der Rekristallisationsphase und gegebenenfalls noch in Form von Schmelze fließfähig ist.

Die Diagramme der Figuren 3 und 4 wurden vorliegend am Beispiel eines Polyethylens als Rohrmaterial erstellt, insbesondere eines HDPE.

Die Brechungsindexdifferenz des gemessenen Brechungsindex zum Kaltwert des Brechungsindex ist entsprechend:

$$\Delta n = n_{kalt} - n_{res}$$

Zu verschiedenen Werten dieser Brechungsindexdifferenz lässt sich ein Sagging-Faktor $SF = k * \Delta n$, mit einem Faktor $k$, bestimmen, dessen Kurvenverlauf in Figur 4 sehr schematisch als gestrichelte Linie bei dem Bezugszeichen 48 gezeigt ist. In dem dargestellten Beispiel verhält sich der Sagging-Faktor $SF$ im Wesentlichen komplementär zu dem resultierenden Brechungsindex $n_{res}$. Der tatsächliche Verlauf des Sagging-Faktors SF kann von diesem linearen Verlauf abweichen. Der tatsächliche Verlauf kann zum Beispiel empirisch im Rahmen einer Versuchsreihe für den jeweils hergestellten rohrförmigen Strang ermittelt werden.

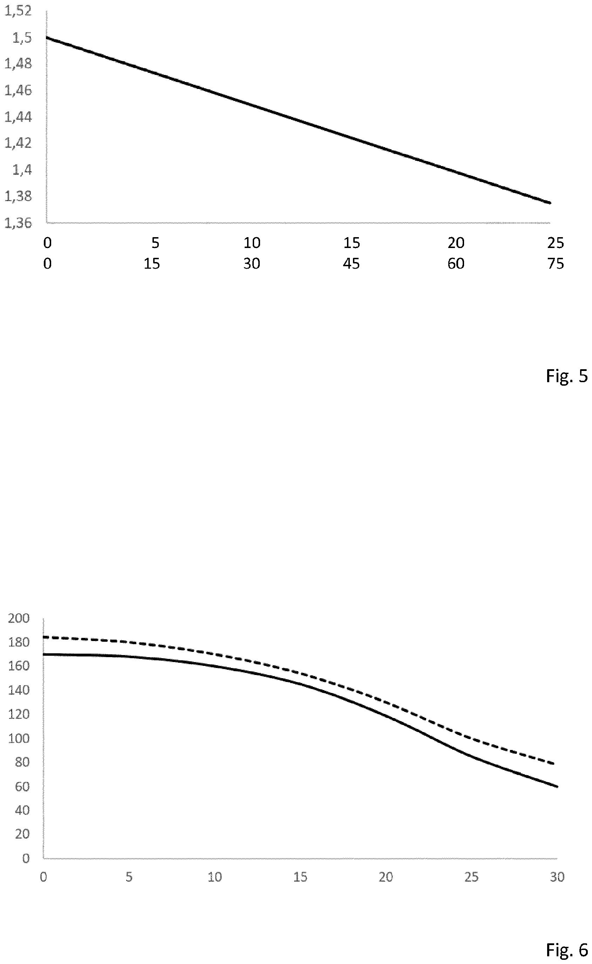

Figur 5 zeigt beispielhaft einen erfindungsgemäß verwendeten Kalibrierzusammenhang. Dieser ordnet den Brechungsindex an der ersten Messposition einem Verhältnis der Austrittsweiten an der Oberseite und der Unterseite der Extrusionsdüse der Extrusionsvorrichtung 20 für extrudiertes Material zu. In Figur 5 ist auf der y-Achse der Brechungsindex an der ersten Messposition aufgetragen. Auf der x-Achse ist in der oberen Reihe das an der ersten Messposition gemessene Verhältnis der Wanddicken des Rohrs 10 an seiner Oberseite und seiner Unterseite, also der Offset zwischen den gemessenen Wanddicken an der Oberseite und Unterseite, in Prozent aufgetragen. In der unteren Reihe auf der x-Achse ist das zugehörige Soll-Verhältnis der Austrittsweiten an der Oberseite und der Unterseite der Extrusionsdüse der Extrusionsvorrichtung 20, also der Offset zwischen den Austrittsweiten an der Oberseite und Unterseite, in Prozent aufgetragen. Der Startwert 0% gibt zu dem Kaltwert des Brechungsindex von 1,5 dabei jeweils einen erforderlichen Unterschied der Austrittsweiten an der Ober- und Unterseite der Extrusionsdüse sowie der an der ersten Messposition an der Ober- und Unterseite gemessenen Wanddicken von Null an. Dies, da in diesem rein theoretischen Fall kein Sagging zu erwarten ist. Die gegenüber 0 erhöhten Werte der oberen Reihe der x-Achse in Figur 5 geben jeweils zu niedrigeren Brechungsindizes, wenn das Rohr 10 also noch fließfähige Anteile aufweist, den für die gewünschte Rohrgeometrie im vollständig erstarrten Zustand erforderlichen Unterschied (Offset) der an der ersten Messposition an der Ober- und Unterseite gemessenen Wanddicken des Rohrs 10 an. Ein Wert von 5% bedeutet also, dass die obere Wanddicke 5% größer ist als die untere Wanddicke. Ein Wert von 10% bedeutet entsprechend, dass die obere Wanddicke 10% größer ist als die untere Wanddicke.

Der durch die untere Reihe der x-Achse in Figur 5 angegebene, zugehörige erforderliche Unterschied (Offset) der Austrittsweiten an der Ober- und Unterseite der Extrusionsdüse ergibt sich durch Multiplikation des Offsets an der ersten Messposition mit einem das unterschiedliche Sagging stromauf und stromab der ersten Messposition berücksichtigenden Gewichtungs-Faktor, wie oben erläutert. Wie oben erläutert, berücksichtigt der Gewichtungs-Faktor, in welchem Maße das Sagging zwischen der Extrusionsvorrichtung 20 und der ersten Messposition höher liegt als das nach der ersten Messposition noch erfolgende Sagging. Im in Figur 5 gezeigten Beispiel wurde ein Gewichtungs-Faktor von 3 angenommen. Dieser Gewichtungs-Faktor kann wie erläutert empirisch ermittelt werden. Der Kalibrierzusammenhang kann zum Beispiel empirisch ermittelt werden, wie oben erläutert. Er kann weiterhin für definierte Geometriewerte des Rohrs 10 an der ersten Messposition bestimmt werden, wie oben erläutert. Der Kalibrierzusammenhang gibt somit für den an der ersten Messposition gemessenen Brechungsindex des Rohrs 10 das Soll-Verhältnis der Austrittsweiten an der Oberseite und der Unterseite der Extrusionsdüse der Extrusionsvorrichtung 20 an, das zu einer vorgegebenen Geometrie des Rohrs 10 im vollständig erstarrten Zustand führt, insbesondere zu einer gleichförmigen Wanddicke über den Umfang des Rohrs 10. Wie in Figur 5 zu erkennen, verringert sich der Brechungsindex mit zunehmendem Verhältnis zwischen den Austrittsweiten an der Oberseite und der Unterseite der Extrusionsdüse.

Figur 6 zeigt zur Veranschaulichung für zwei unterschiedliche, an der ersten Messposition gemessene Brechungsindizes den radialen Temperaturverlauf innerhalb einer Wand des Rohrs 10 von innen nach außen, wie er sich an der ersten Messposition der ersten Terahertz-Messeinrichtung 24 ergibt. Dabei ist die Temperatur in °C über der radialen Position aufgetragen, zum Beispiel in mm. Die durchgezogene Kurve entspricht einem größeren gemessenen Brechungsindex als die gestrichelte Kurve. Entsprechend ist der durch die gestrichelte Kurve angezeigte Temperaturverlauf höher als der durch die durchgezogene Linie angezeigte Temperaturverlauf. Die Temperatur an der Außenseite des Rohrs ist durch die in der ersten Kühlstrecke 22 auf die Außenseite aufgebrachte Kühlflüssigkeit stark abgekühlt und erstarrt. In radialer Richtung nach innen steigt die Temperatur dagegen stark an, da die Kühlung der Außenwand diese Bereiche noch nicht bis zur Erstarrung abgekühlt hat. Hier liegen entsprechend noch fließfähige Anteile vor. Oberhalb von etwa 120°C ist das Material fließfähig und es kommt entsprechend zu Sagging.

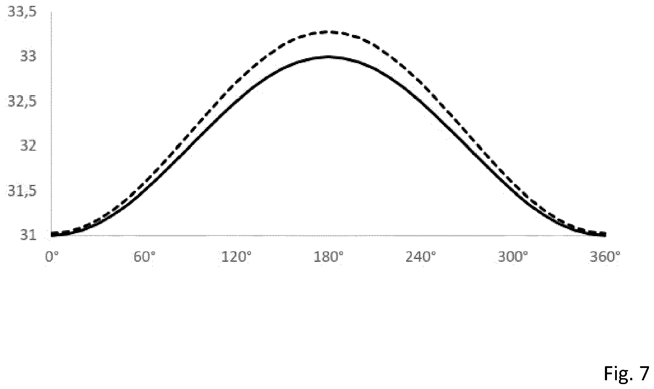

Figur 7 zeigt beispielhaft für zwei unterschiedliche Fälle an der ersten Messposition gemessene Wanddicken über den Umfang des Rohrs 10, wobei die Wanddicke des Rohrs 10 in mm über der Winkelposition in ° aufgetragen ist. 180° ist die Oberseite des Rohrs und 0° bzw. 360° die Unterseite. Die gestrichelte Linie entspricht zum Beispiel der in Figur 6 gestrichelt gezeigten Temperaturverteilung und die durchgezogene Linie entspricht zum Beispiel der in Figur 6 durchgezogen gezeigten Temperaturverteilung. Die in Figur 7 gezeigten Kurven wurden empirisch ermittelt und führen jeweils zu einer gleichförmigen Wanddicke über den Umfang des Rohrs 10. Erkennbar ist zur Kompensation des Saggings für die höhere Temperaturverteilung eine stärkere Abweichung (Offset) der Austrittsweite an der Oberseite des Rohrs 10 (180°) von der Unterseite des Rohrs 10 (0°) erforderlich als im Fall der niedrigeren Temperaturverteilung. Zum Beispiel ist im Fall der durchgezogenen Linie für die gewünschte Rohrgeometrie im vollständig erstarrten Zustand ein Offset der Wanddicken oben/unten von etwa 6,4% (33mm zu 31mm) erforderlich. Aus dem Kalibrierzusammenhang nach Figur 5 ergibt sich, dass dies einem Brechungsindex an der ersten Messposition von etwa 1,46 entspricht. Wird an der ersten Messposition also ein Brechungsindex von 1,46 gemessen, muss das an der ersten Messposition gemessene Verhältnis der Wanddicken oben/unten 1,064, oder in Prozent des Offset 6,4%, betragen. Durch Umrechnung mit dem Gewichtungs-Faktor, wie oben erläutert, bedeutet dies, dass das Verhältnis der Austrittsweiten für extrudiertes Material an der Extrusionsdüse 1,192, oder in Prozent des Offset 19,2%, betragen muss. Dieses Verhältnis bildet also das Soll-Verhältnis, auf das die Extrusionsdüse einzustellen ist. Für die gestrichelte Linie in Figur 7 ergeben sich entsprechende, andere Werte, die wiederum einem anderen Brechungsindex in Figur 5 entsprechen. Durch Durchführung einer Mehrzahl von Messungen, wie in Figur 7 gezeigt, kann der Kalibrierzusammenhang nach Figur 5 empirisch aufgebaut werden, wobei zwischen einzelnen Messwerten beispielsweise interpoliert werden kann.

Zur Durchführung des erfindungsgemäßen Verfahrens mit der in den Figuren dargestellten erfindungsgemäßen Vorrichtung werden mittels der ersten Terahertz-Messeinrichtung 24 an der ersten Messposition unmittelbar stromab der ersten Kühlstrecke 22 an einer Vielzahl von Messorten über den Umfang des Rohrs 10 verteilt der Brechungsindex über den Querschnitt mindestens einer Wand des Rohrs 10 und Geometriewerte, insbesondere die Wanddicke und/oder der Innen- und/oder Außendurchmesser, des Rohrs 10 gemessen, wie oben erläutert. Anhand der Messung der Geometriewerte wird vorzugsweise überprüft, ob die an der ersten Messposition vorliegenden Geometriewerte den Geometriewerten entsprechen, für die der Kalibrierzusammenhang erstellt wurde. Ist dies nicht der Fall, kann eine Warnung ausgegeben werden oder der Kalibrierzusammenhang zum Beispiel um einen der festgestellten Abweichung der Geometriewerte entsprechenden Faktor verändert werden. Weiterhin wird mittels des in Figur 5 gezeigten Kalibrierzusammenhangs zu dem an der ersten Messposition gemessenen Brechungsindex und den an der ersten Messposition gemessenen Geometriewerten das sich nach dem Kalibrierzusammenhang ergebende Soll-Verhältnis der Austrittsweiten an der Oberseite und der Unterseite der Extrusionsdüse der Extrusionsvorrichtung 20 festgestellt und mit dem tatsächlich eingestellten Verhältnis der Austrittsweiten an der Oberseite und der Unterseite der Extrusionsdüse der Extrusionsvorrichtung 20 verglichen. Weichen diese Verhältnisse voneinander ab, kann eine Warnung ausgegeben werden und/oder die Extrusionsvorrichtung 20 so angesteuert werden, dass das Verhältnis der Austrittsweiten an der Oberseite und der Unterseite der Extrusionsdüse an das sich nach dem Kalibrierzusammenhang ergebende Soll-Verhältnis angepasst wird. Diese Ansteuerung der Extrusionsvorrichtung 20 kann automatisch erfolgen. Die Messwerte der Terahertz-Messeinrichtung 24 liegen an der Auswerteeinrichtung 38 an. In der Auswerteeinrichtung 38 kann auch der Kalibrierzusammenhang gespeichert sein. Die Auswerteeinrichtung 38 kann die erläuterte Auswertung und gegebenenfalls Ansteuerung der Extrusionsvorrichtung 20 durchführen.

Mittels der weiteren Terahertz-Messrichtung 27 werden außerdem an einer stromab der ersten Messposition angeordneten zweiten Messposition, an der das Rohr 10 im Wesentlichen vollständig erstarrt ist, der Brechungsindex und/oder die Wanddicke und/oder der Innen- und/oder Außendurchmesser des Rohrs 10 gemessen. Beispielsweise können durch die weitere Terahertz-Messeinrichtung 27 der Brechungsindex an der zweiten Messposition, der insbesondere dem Kaltwert des Brechungsindex entsprechen kann, sowie die Wanddicke des Rohrs 10 zumindest auf seiner Oberseite und auf seiner Unterseite gemessen werden. Die Messergebnisse der weiteren Terahertz-Messrichtung 27 liegen ebenfalls an der Auswerteeinrichtung 38 an. Anhand der Messwerte der weiteren Terahertz-Messeinrichtung 27, die aufgrund der bereits im Wesentlichen vollständig erfolgten Erstarrung des Rohrs 10 den endgültigen Parametern des Rohrs 10 entsprechen, können der verwendete Kalibrierzusammenhang sowie der Kaltwert des Brechungsindex und das vorhergesagte Sagging anhand der tatsächlichen Parameter des Rohrs 10 überprüft und gegebenenfalls korrigiert werden. Dies erfolgt durch die Auswerteeinrichtung 38. Gegebenenfalls kann der Kalibrierzusammenhang auf dieser Grundlage angepasst werden.

Wie erläutert, kann auf Grundlage der erfindungsgemäßen Auswertung der Messwerte und unter Heranziehung des Kalibrierzusammenhangs durch die Auswerteeinrichtung 38, die hierzu eine entsprechende Steuereinrichtung umfassen kann, die Extrusionsvorrichtung 20 angesteuert werden. Insbesondere kann durch die Auswerteeinrichtung 38 wie erläutert das Verhältnis der Austrittsweiten für extrudiertes Material an der Oberseite und der Unterseite der Extrusionsdüse der Extrusionsvorrichtung 20 so eingestellt werden, dass sich im erstarrten Zustand des Rohrs 10 die gewünschte Wandgeometrie des Rohrs 10, insbesondere eine über den Umfang möglichst gleichförmige Wanddicke, ergibt. Dazu kann durch die Steuereinrichtung der Auswerteeinrichtung 38 zum Beispiel die Spaltbreite des ringförmigen Austrittsspalts der Extrusionsdüse an der Oberseite und der Unterseite der Extrusionsdüse entsprechend eingestellt werden. Auch ist es möglich, dass durch die Steuereinrichtung der Auswerteeinrichtung 38 auf Heizelemente der Extrusionsdüse in geeigneter Weise Einfluss genommen wird.

Bezugszeichenliste

| 10 | Rohr |
|---|---|
| 12 | Wand |
| 14 | Hohlraum |
| 16 | äußere Oberfläche |
| 18 | innere Oberfläche |
| 20 | Extrusionsvorrichtung |
| 22,26 | Kühlstrecke |
| 24 | Terahertz-Messeinrichtung |
| 25 | weitere Terahertz-Messeinrichtung |
| 27 | Transceiver |
| 28 | Ablängvorrichtung |
| 29 | Reflektor |
| 30 | Transceiver |
| 31 | Terahertzstrahlung |
| 32 | Terahertzstrahlung |
| 34 | Reflektor |
| 36 | Leitung |
| 38 | Auswerteeinrichtung |
| 40,42 | Wanddicken |
| 44 | Durchmesser |
| 46 | Brechungsindex-Kurve |
| 48 | Sagging-Faktor-Kurve |

Patentansprüche

1. Verfahren zum Überprüfen der Einstellung einer einen entlang seiner Längsrichtung geförderten rohrförmigen Strang (10) erzeugenden Extrusionsvorrichtung (20), wobei die Austrittsweiten für extrudiertes Material an einer Oberseite und an einer Unterseite einer Extrusionsdüse der Extrusionsvorrichtung unterschiedlich eingestellt ist, wobei das Verfahren folgende Schritte umfasst:

   • mittels einer Terahertz-Messeinrichtung (24) wird an einer ersten Messposition stromab zumindest einer ersten Kühlstrecke (22) für den rohrförmigen Strang (10), an der der rohrförmige Strang (10) noch nicht vollständig erstarrt ist, der Brechungsindex über den Querschnitt mindestens einer Wand des rohrförmigen Strangs (10) gemessen,
   • mittels der Terahertz-Messeinrichtung (24) werden an der ersten Messposition weiterhin an mindestens einem Messort an der Oberseite und an mindestens einem Messort an der Unterseite des rohrförmigen Strangs (10) Geometriewerte gemessen, wobei die Geometriewerte die Wanddicke (40, 42) und/oder den Innen- und/oder Außendurchmesser (44) des rohrförmigen Strangs (10) umfassen,
   • für den gemessenen Brechungsindex und für ein Verhältnis der an der Oberseite und an der Unterseite des rohrförmigen Strangs (10) gemessenen Geometriewerte wird anhand eines zuvor bestimmten Kalibrierzusammenhangs zwischen dem Brechungsindex an der ersten Messposition und dem Verhältnis der Austrittsweiten für extrudiertes Material an der Oberseite und an der Unterseite der Extrusionsdüse das Verhältnis der an der Extrusionsvorrichtung (20) eingestellten Austrittsweiten für extrudiertes Material an der Oberseite und an der Unterseite der Extrusionsdüse überprüft.

2. Verfahren nach Anspruch 1, **dadurch gekennzeichnet, dass** der Kalibrierzusammenhang für definierte Geometriewerte des rohrförmigen Strangs (10) bestimmt wird.

3. Verfahren nach Anspruch 2, **dadurch gekennzeichnet, dass** bei einer festgestellten Abweichung der an der ersten Messposition gemessenen Geometriewerte von den definierten Geometriewerten eine Warnung ausgegeben wird und/oder der Kalibrierzusammenhang entsprechend der festgestellten Abweichung der Geometriewerte angepasst wird.

4. Verfahren nach einem der vorhergehenden Ansprüche, **dadurch gekennzeichnet, dass** bei der Ermittlung des Kalibrierzusammenhangs Materialparameter des rohrförmigen Strangs (10), insbesondere die Wärmeleitfähigkeit und/oder die Wärmekapazität, und/oder Produktionsparameter, insbesondere die Temperatur der Extrusionsdüse und/oder die Abzugsgeschwindigkeit der Extrusionsvorrichtung (20) und/oder Abkühlparameter des erzeugten rohrförmigen Strangs (10), berücksichtigt werden.

5. Verfahren nach einem der vorhergehenden Ansprüche, **dadurch gekennzeichnet, dass** der Kalibrierzusammenhang den Brechungsindex an der ersten Messposition einem Soll-Verhältnis der Austrittsweiten für extrudiertes Material an der Oberseite und an der Unterseite der Extrusionsdüse zuordnet, so dass der rohrförmige Strang (10) nach seiner vollständigen Erstarrung einen Soll-Wanddickenverlauf, insbesondere einen gleichförmigen Wanddickenverlauf, über seinen Umfang aufweist.

6. Verfahren nach Anspruch 5, **dadurch gekennzeichnet, dass** bei Feststellen einer Abweichung zwischen dem sich für den an der ersten Messposition gemessenen Brechungsindex nach dem Kalibrierzusammenhang ergebenden Soll-Verhältnis der Austrittsweiten der Extrusionsdüse und dem Verhältnis der eingestellten Austrittsweiten der Extrusionsdüse das sich für den gemessenen Brechungsindex nach dem Kalibrierzusammenhang ergebende Soll-Verhältnis angezeigt wird und/oder dass die Extrusionsvorrichtung (20) zum Einstellen des sich für den gemessenen Brechungsindex nach dem Kalibrierzusammenhang ergebenden Soll-Verhältnisses angesteuert wird, vorzugsweise automatisch.

7. Verfahren nach einem der Ansprüche 5 oder 6, **dadurch gekennzeichnet, dass** der Kalibrierzusammenhang den Brechungsindex an der ersten Messposition weiterhin einem Verhältnis der Wanddicken an der Oberseite und an der Unterseite des rohrförmigen Strangs (10) an der ersten Messposition zuordnet, wobei zur Umrechnung zwischen dem Verhältnis der Wanddicken an der Oberseite und an der Unterseite des rohrförmigen Strangs (10) an der ersten Messposition und dem Soll-Verhältnis der Austrittsweiten für extrudiertes Material an der Oberseite und an der Unterseite der Extrusionsdüse ein Gewichtungs-Faktor angewendet wird, der einen unterschiedlichen Sagging-Grad stromauf der ersten Messposition und stromab der ersten Messposition berücksichtigt.

8. Verfahren nach einem der vorhergehenden Ansprüche, **dadurch gekennzeichnet, dass**, auf Grundlage eines Vergleichs der an der ersten Messposition gemessenen Geometriewerte mit den an der Extrusionsvorrichtung (20) eingestellten Austrittsweiten ein bis zur vollständigen Erstarrung des rohrförmigen Strangs (10) erwartetes Sagging des rohrförmigen Strangs (10) prognostiziert wird.

9. Verfahren nach Anspruch 8 und einem der Ansprüche 5 bis 7, **dadurch gekennzeichnet, dass** das prognostizierte Sagging und/oder erwartete Werte der gemessenen Geometriewerte im vollständig erstarrten Zustand des rohrförmigen Strangs (10) angezeigt werden und/oder dass das sich nach dem Kalibrierzusammenhang ergebende Soll-Verhältnis der Austrittsweiten für extrudiertes Material an der Oberseite und an der Unterseite der Extrusionsdüse auf Grundlage des prognostizierten Saggings angepasst wird.

10. Verfahren nach einem der vorhergehenden Ansprüche, **dadurch gekennzeichnet, dass** der Brechungsindex an der ersten Messposition an der Oberseite und/oder der Unterseite des rohrförmigen Strangs (10) gemessen wird.

11. Verfahren nach einem der vorhergehenden Ansprüche, **dadurch gekennzeichnet, dass** der Brechungsindex und/oder die Geometriewerte an einer Vielzahl von Messorten über den Umfang des rohrförmigen Strangs (10) gemessen werden.

12. Verfahren nach einem der Ansprüche 1 bis 11, **dadurch gekennzeichnet, dass** der Brechungsindex aus einem Vergleich der Laufzeit von durch die Terahertz-Messeinrichtung (24) ausgesandter Messstrahlung (32) ohne in dem Strahlengang der Messstrahlung (32) angeordnetem rohrförmigem Strang (10) mit der Laufzeit der Messstrahlung (32) mit in dem Strahlengang der Messstrahlung (32) angeordnetem rohrförmigem Strang (10) bestimmt wird.

13. Verfahren nach einem der Ansprüche 1 bis 11, **dadurch gekennzeichnet, dass** der Brechungsindex bestimmt wird, indem mit der Terahertz-Messeinrichtung (24) die optische Wanddicke (40, 42) des rohrförmigen Strangs (10) bestimmt wird, weiter indem mit der Terahertz-Messeinrichtung (24) ein Außendurchmesser (44) und ein Innendurchmesser des rohrförmigen Strangs (10) bestimmt wird, und indem aus einem Vergleich der bestimmten Außen- und Innendurchmesser (44) mit der bestimmten optischen Wanddicke (40, 42) der Brechungsindex des rohrförmigen Strangs (10) bestimmt wird.

14. Verfahren nach einem der vorhergehenden Ansprüche, **dadurch gekennzeichnet, dass** die Geometriewerte des rohrförmigen Strangs (10) aus einer Laufzeitmessung von durch die Terahertz-Messeinrichtung (24) ausgesandter Messstrahlung (32) bestimmt werden.

15. Verfahren nach einem der vorhergehenden Ansprüche, **dadurch gekennzeichnet, dass** an einer von der ersten Messposition in Längsrichtung des rohrförmigen Strangs (10) beabstandeten zweiten Messposition, insbesondere einer zweiten Messposition stromab der ersten Messposition, an der der rohrförmige Strang (10) im Wesentlichen vollständig erstarrt ist, mit einer weiteren Terahertz-Messeinrichtung (25) der Brechungsindex über den Querschnitt mindestens einer Wand des rohrförmigen Strangs (10) und/oder die Wanddicke (40, 42) und/oder der Innen- und/oder Außendurchmesser (44) des rohrförmigen Strangs (10) gemessen werden.

16. Verfahren nach Anspruch 15, **dadurch gekennzeichnet, dass** an der zweiten Messposition mit der weiteren Terahertz-Messeinrichtung (25) die Wanddicke (40, 42) und/oder der Innen- und/oder Außendurchmesser (44) des rohrförmigen Strangs (10) an der Oberseite des rohrförmigen Strangs (10) und an der Unterseite des rohrförmigen Strangs (10) gemessen werden.

17. Verfahren nach einem der Ansprüche 15 oder 16, **dadurch gekennzeichnet, dass** anhand der Messergebnisse der weiteren Terahertz-Messeinrichtung (25) der Kalibrierzusammenhang überprüft und gegebenenfalls korrigiert wird.

18. Vorrichtung zur Durchführung des Verfahrens nach einem der vorhergehenden Ansprüche, umfassend die Terahertz-Messeinrichtung (24) und eine Auswerteeinrichtung (38), die dazu ausgebildet ist, das Verhältnis der eingestellten Austrittsweiten für extrudiertes Material an der Oberseite und an der Unterseite der Extrusionsdüse zu überprüfen.

**Claims**

1. A method for checking the setting of an extrusion device (20) which produces a tubular strand (10) conveyed along the longitudinal direction thereof, wherein the exit widths for extruded material on a top side and on a bottom side of an extrusion die of the extrusion device are set differently, wherein the method comprises the following steps:

  • by means of a terahertz measuring apparatus (24), the refractive index is measured over the cross-section of at least one wall of the tubular strand (10) at a first measuring position downstream of at least one first cooling section (22) for the tubular strand (10), at which the tubular strand (10) has not yet completely solidified,
  • by means of the terahertz measuring apparatus (24), geometry values are further measured at the first measuring position at at least one measuring location on the top side and at at least one measuring location on the bottom side of the tubular strand (10), wherein the geometry values comprise the wall thickness (40, 42) and/or the internal and/or external diameter (44) of the tubular strand (10),
  • for the measured refractive index and for a ratio of the geometry values measured on the top side and on the bottom side of the tubular strand (10), the ratio of the exit widths set on the extrusion device (20) for extruded material on the top side and on the bottom side of the extrusion die is checked using a previously determined calibration correlation between the refractive index at the first measuring position and the ratio of the exit widths for extruded material on the top side and on the bottom side of the extrusion die.

2. The method according to Claim 1, **characterized in that** the calibration correlation is determined for defined geometry values of the tubular strand (10).

3. The method according to Claim 2, **characterized in that**, if a deviation of the geometry values measured at the first measuring position from the defined geometry values is ascertained, a warning is output and/or the calibration correlation is adjusted in accordance with the ascertained deviation of the geometry values.

4. The method according to one of the preceding claims, **characterized in that**, when establishing the calibration correlation, material parameters of the tubular strand (10), in particular the thermal conductivity and/or the thermal capacity, and/or production parameters, in particular the temperature of the extrusion die and/or the haul-off speed of the extrusion device (20) and/or cooling parameters of the tubular strand (10) produced, are taken into account.

5. The method according to one of the preceding claims, **characterized in that** the calibration correlation assigns the refractive index at the first measuring position to a nominal ratio of the exit widths for extruded material on the top side and on the bottom side of the extrusion die, so that the tubular strand (10) has a nominal wall thickness profile, in particular a uniform wall thickness profile, over its circumference following its complete solidification.

6. The method according to Claim 5, **characterized in that**, if a deviation is established between the resulting nominal ratio of the exit widths of the extrusion die for the refractive index measured at the first measuring position according to the calibration correlation and the ratio of the set exit widths of the extrusion die, the resulting nominal ratio for the measured refractive index according to the calibration correlation is displayed, and/or **in that** the extrusion device (20) is triggered in order to set the resulting nominal ratio for the measured refractive index according to the calibration correlation, preferably automatically.

7. The method according to one of Claims 5 or 6, **characterized in that** the calibration correlation further assigns the refractive index at the first measuring position to a ratio of the wall thicknesses on the top side and on the bottom side of the tubular strand (10) at the first measuring position, wherein a weighting factor is utilized to convert between the ratio of the wall thicknesses on the top side and on the bottom side of the tubular strand (10) at the first measuring position and the nominal ratio of the exit widths for extruded material on the top side and on the bottom side of the extrusion die, which weighting factor takes into account a different degree of sagging upstream of the first measuring position and downstream of the first measuring position.

8. The method according to one of the preceding claims, **characterized in that**, on the basis of a comparison of the geometry values measured at the first measuring position with the exit widths set on the extrusion device (20), an expected sagging of the tubular strand (10) up to the complete solidification of the tubular strand (10) is predicted.

9. The method according to Claim 8 and one of Claims 5 to 7, **characterized in that** the predicted sagging and/or expected values of the measured geometry values in the completely solidified state of the tubular strand (10) is/are displayed, and/or **in that** the resulting nominal ratio of the exit widths for extruded material on the top side and on the bottom side of the extrusion die according to the calibration correlation is adjusted on the basis of the predicted sagging.

10. The method according to one of the preceding claims, **characterized in that** the refractive index is measured at the first measuring position on the top side and/or the bottom side of the tubular strand (10).

11. The method according to one of the preceding claims, **characterized in that** the refractive index and/or the geometry values is/are measured at a plurality of measuring locations over the circumference of the tubular strand (10).

12. The method according to one of Claims 1 to 11, **characterized in that** the refractive index is determined from a comparison of the transit time of measuring radiation (32) emitted by the terahertz measuring apparatus (24) without a tubular strand (10) arranged in the beam path of the measuring radiation (32) with the transit time of the measuring radiation (32) with a tubular strand (10) arranged in the beam path of the measuring radiation (32).

13. The method according to one of Claims 1 to 11, **characterized in that** the refractive index is determined by determining the optical wall thickness (40, 42) of the tubular strand (10) with the terahertz measuring apparatus (24), further by determining an external diameter (44) and an internal diameter of the tubular strand (10) with the terahertz measuring apparatus (24), and by determining the refractive index of the tubular strand (10) from a comparison of the determined external and internal diameter (44) with the determined optical wall thickness (40, 42).

14. The method according to one of the preceding claims, **characterized in that** the geometry values of the tubular strand (10) are determined from a transit time measurement of measuring radiation (32) emitted by the terahertz measuring apparatus (24).

15. The method according to one of the preceding claims, **characterized in that**, at a second measuring position at a distance from the first measuring position in the longitudinal direction of the tubular strand (10), in particular a second measuring position downstream of the first measuring position at which the tubular strand (10) has substantially completely solidified, the refractive index over the cross-section of at least one wall of the tubular strand (10) and/or the wall thickness (40, 42) and/or the internal and/or external diameter (44) of the tubular strand (10) is/are measured with a further terahertz measuring apparatus (25).

16. The method according to Claim 15, **characterized in that** at the second measuring position, the wall thickness (40, 42) and/or the internal and/or external diameter (44) of the tubular strand (10) on the top side of the tubular strand (10) and on the bottom side of the tubular strand (10) is/are measured with the further terahertz measuring apparatus (25).

17. The method according to one of Claims 15 or 16, **characterized in that** the calibration correlation is checked and, if necessary, corrected using the measuring results of the further terahertz measuring apparatus (25).

18. A device for carrying out the method according to one of the preceding claims, comprising the terahertz measuring apparatus (24) and an evaluation apparatus (38) which is configured to check the ratio of the set exit widths for extruded material on the top side and on the bottom side of the extrusion die.

**Revendications**

1. Procédé de contrôle du réglage d'un dispositif d'extrusion (20) produisant un boudin tubulaire (10) transporté le long de sa direction longitudinale, dans lequel les largeurs de sortie pour le matériau extrudé sont réglés de façon différente sur un côté supérieur et sur un côté inférieur de la filière d'extrusion du dispositif d'extrusion, le procédé comportant les étapes suivantes :

   • l'indice de réfraction est mesuré sur la section transversale d'au moins une paroi du boudin tubulaire (10) au moyen d'un appareil de mesure térahertz (24), au niveau d'une première position de mesure en aval d'au moins un premier trajet de refroidissement (22) pour le boudin tubulaire (10), à laquelle le boudin tubulaire (10) n'est pas encore complètement solidifié,
   • des valeurs géométriques sont en outre mesurées à la première position de mesure, au moyen de l'appareil de mesure térahertz (24), au niveau d'au moins un point de mesure sur le côté supérieur et d'au moins un point de mesure sur le côté inférieur du boudin tubulaire (10), dans lequel les valeurs géométriques comportent l'épaisseur de paroi (40, 42) et/ou le diamètre intérieur et/ou extérieur (44) du boudin tubulaire (10),
   • pour l'indice de réfraction mesuré et pour un rapport des valeurs géométriques mesurées sur le côté supérieur et sur le côté inférieur du boudin tubulaire (10), le rapport des largeurs de sortie pour du matériau extrudé sur le côté supérieur et sur le côté inférieur de la filière d'extrusion est vérifié à l'aide d'une relation d'étalonnage déterminée préalablement entre l'indice de réfraction à la première position de mesure et le rapport des largeurs de sortie pour du matériau extrudé sur le côté supérieur et sur le côté inférieur de la filière d'extrusion.

2. Procédé selon la revendication 1, **caractérisé en ce que** la relation d'étalonnage est déterminée pour des valeurs géométriques définies du boudin tubulaire (10).

3. Procédé selon la revendication 2, **caractérisé en ce que** lors d'un écart constaté des valeurs géométriques mesurées à la première position par rapport à des valeurs géométriques définies, une alerte est émise et/ou la relation d'étalonnage est adaptée en fonction de l'écart constaté.

4. Procédé selon l'une des revendications précédentes, **caractérisé en ce que** lors de la détermination de la relation d'étalonnage, des paramètres de matériau du boudin tubulaire (10), en particulier la conductivité thermique et/ou la capacité thermique, et/ou des paramètres de production, en particulier la température de la filière d'extrusion et/ou la vitesse d'enlèvement du dispositif d'extrusion (20) et/ou des paramètres de refroidissement du boudin tubulaire (10) fabriqué, sont pris en compte.

5. Procédé selon l'une des revendications précédentes, **caractérisé en ce que** la relation d'étalonnage associe l'indice de réfraction à la première position de mesure à un rapport théorique des largeurs de sortie pour du matériau extrudé sur le côté supérieur et sur le côté inférieur de la filière d'extrusion, de telle façon que le boudin tubulaire (10) présente une évolution d'épaisseur de paroi théorique, en particulier une évolution d'épaisseur de paroi uniforme sur sa circonférence après sa solidification complète.

6. Procédé selon la revendication 5, **caractérisé en ce que** lorsqu'un écart est constaté entre le rapport théorique des largeurs de sortie de la filière d'extrusion obtenu selon la relation d'étalonnage pour l'indice de réfraction mesuré à la première position de mesure et le rapport des largeurs de sortie réglées de la filière d'extrusion, le rapport théorique obtenu selon la relation d'étalonnage pour l'indice de réfraction mesuré est affiché et/ou **en ce que** le dispositif d'extrusion (20) est activé, de préférence automatiquement, pour le réglage du rapport théorique obtenu selon la relation d'étalonnage pour l'indice de réfraction mesuré.

**7.** Procédé selon l'une des revendications 5 ou 6, **caractérisé en ce que** la relation d'étalonnage associe en outre l'indice de réfraction à la première position de mesure à un rapport des épaisseurs de paroi sur le côté supérieur et sur le côté inférieur du boudin tubulaire (10) à la première position de mesure, dans lequel, pour la conversion entre le rapport des épaisseurs de paroi sur le côté supérieur et sur le côté inférieur du boudin tubulaire (10) à la première position de mesure et le rapport théorique des largeurs de sortie pour du matériau extrudé sur le côté supérieur et sur le côté inférieur de la filière d'extrusion, un facteur de pondération est utilisé, lequel tient compte d'un degré d'affaissement différent en amont de la première position de mesure et en aval de la première position de mesure.

**8.** Procédé selon l'une des revendications précédentes, **caractérisé en ce qu'**un affaissement attendu du boudin tubulaire (10) jusqu'à la solidification complète du boudin tubulaire (10) est prévu sur la base d'une comparaison des valeurs géométriques mesurées à la première position de mesure avec les largeurs de sortie réglées au niveau du dispositif d'extrusion (20).

**9.** Procédé selon la revendication 8 et l'une des revendications 5 à 7, **caractérisé en ce que** l'affaissement prévu et/ou des valeurs attendues des valeurs géométriques mesurées à l'état complètement solidifié du boudin tubulaire (10) sont affichés et/ou **en ce que** le rapport théorique des largeurs de sortie pour du matériau extrudé sur le côté supérieur et sur le côté inférieur de la filière d'extrusion, obtenu selon la relation d'étalonnage, est adapté sur la base de l'affaissement prévu.

**10.** Procédé selon l'une des revendications précédentes, **caractérisé en ce que** l'indice de réfraction est mesuré à la première position de mesure sur le côté supérieur et/ou le côté inférieur du boudin tubulaire (10).

**11.** Procédé selon l'une des revendications précédentes, **caractérisé en ce que** l'indice de réfraction et/ou les valeurs géométriques sont mesurés en une pluralité de points de mesure sur la circonférence du boudin tubulaire (10).

**12.** Procédé selon l'une des revendications 1 à 11, **caractérisé en ce que** l'indice de réfraction est déterminé à partir d'une comparaison du temps de propagation du rayonnement de mesure (32) émis par l'appareil de mesure térahertz (24) sans boudin tubulaire (10) disposé sur la trajectoire de faisceau du rayonnement de mesure (32) avec le temps de propagation du rayonnement de mesure (32) avec un boudin tubulaire (10) disposé sur la trajectoire de faisceau du rayonnement de mesure (32).

**13.** Procédé selon l'une des revendications 1 à 11, **caractérisé en ce que** l'indice de réfraction est déterminé par détermination l'épaisseur de paroi optique (40, 42) du boudin tubulaire (10) à l'aide de l'appareil de mesure térahertz (24), ainsi que par détermination d'un diamètre extérieur (44) et d'un diamètre intérieur du boudin tubulaire (10) à l'aide de l'appareil de mesure térahertz (24), et par détermination de l'indice de réfraction du boudin tubulaire (10) à partir d'une comparaison des diamètres extérieur et intérieur (44) déterminés avec l'épaisseur de paroi optique (40, 42) déterminée.

**14.** Procédé selon l'une des revendications précédentes, **caractérisé en ce que** les valeurs géométriques du boudin tubulaire (10) sont déterminées à partir d'une mesure de temps de propagation du rayonnement de mesure (32) émis par l'appareil de mesure térahertz (24).

**15.** Procédé selon l'une des revendications précédentes, **caractérisé en ce qu'**au niveau d'une deuxième position de mesure espacée de la première position de mesure dans la direction longitudinale du boudin tubulaire (10), en particulier une deuxième position de mesure en aval de la première position de mesure, à laquelle le boudin tubulaire (10) est quasiment complètement solidifié, l'indice de réfraction sur la section transversale d'au moins une paroi du boudin tubulaire (10) et/ou l'épaisseur de paroi (40, 42) et/ou le diamètre intérieur et/ou extérieur (44) du boudin tubulaire (10) sont mesurés à l'aide d'un autre appareil de mesure térahertz (25).

**16.** Procédé selon la revendication 15, **caractérisé en ce qu'**au niveau de la deuxième position de mesure, l'épaisseur de paroi (40, 42) et/ou le diamètre intérieur et/ou extérieur (44) du boudin tubulaire (10) sont mesurés sur le côté supérieur du boudin tubulaire (10) et sur le côté inférieur du boudin tubulaire (10) à l'aide de l'autre appareil de mesure térahertz (25).

**17.** Procédé selon l'une des revendications 15 ou 16, **caractérisé en ce que** la relation d'étalonnage est vérifiée et si nécessaire corrigée à l'aide des résultats de mesure de l'autre appareil de mesure térahertz (25).

**18.** Dispositif de mise en oeuvre du procédé selon l'une des revendications précédentes, comportant l'appareil de mesure térahertz (24) et un appareil d'évaluation (38), lequel est conçu pour vérifier le rapport des largeurs de sortie réglées pour du matériau extrudé sur le côté supérieur et sur le côté inférieur de la filière d'extrusion.

Fig. 1

Fig. 2

fest    Rekristalli-    flüssig
sationsphase

Brechungsindex

1,50

1,48

1,46

1,44

1,42

1,40

1,38

Temperatur (°C)

Fig. 3

Brechungsindex $n_{PE}$

Erstarrte Zone $n_{kalt}$    Nicht erstarrte Zone

max  1,50

Sagging-Faktor SF= k * Δn

$\Delta n = n_{kalt} - n_{res}$

Resultierender Brechungsindex $n_{res}$

1,46

48

46

0  1,43

x = 0    x = 0,4    x = 1
außen    innen

Radiale Position x

Fig. 4

Fig. 5

Fig. 6

Fig. 7

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2022058081 A1
- WO 2022106180 A1
- EP 3265748 A
- DE 102018128248 A1
- WO 2016139155 A1